# EUROPEAN PATENT APPLICATION

(11) **EP 4 832 554 A1**
(43) Date of publication of application: **28.10.2026**
(21) Application number: 23962257.4
(22) Date of filing: 21.12.2023
(51) Int. Cl.: H04W 24/08, H04W 24/10

(54) **TERMINAL, WIRELESS COMMUNICATION METHOD, AND BASE STATION**

(71) Applicant: NTT DOCOMO, INC., Tokyo 100-6150 (JP)
(72) Inventor: ECHIGO, Haruhi, Tokyo 100-6150 (JP); NAGATA, Satoshi, Tokyo 100-6150 (JP); YOU, Luhua, Beijing 100190 (CN); PI, Qiping, Beijing 100190 (CN); WANG, Jing, Beijing 100190 (CN); CHEN, Lan, Beijing 100190 (CN)
(74) Representative: Hoffmann Eitle
(86) International application number: PCT/JP2023/046034
(87) International publication number: WO 2025/134337

(57) **Abstract**

A terminal according to an aspect of the present disclosure includes: a receiving section configured to receive information regarding additional conditions or performance monitoring for a certain model or functionality; and a control section configured to control monitoring of the additional conditions or performance monitoring based on the information, in which the control section determines execution of monitoring of the additional conditions based on a result of the performance monitoring.

## Description

### Technical Field

The present disclosure relates to a terminal, a radio communication method, and a base station in next-generation mobile communication systems.

### Background Art

In a universal mobile telecommunications system (UMTS) network, specifications of long term evolution (LTE) have been drafted for the purpose of further increasing data rates, providing low latency, and so on (NPL 1). Furthermore, the specifications of LTE-Advanced (3GPP Rel. 10 to 14) have been drafted for the purpose of further increasing capacity and advancement of LTE (third generation partnership project (3GPP (registered trademark)) release (Rel.) 8 and 9).

Successor systems to LTE (for example, also referred to as 5th generation mobile communication system (5G), 5G+ (plus), 6th generation mobile communication system (6G), New Radio (NR), or 3GPP Rel. 15 and subsequent releases) are also being studied.

### Citation List

### Non Patent Literature

NPL 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010.

### Summary of Invention

### Technical Problem

For future radio communication technologies, it is studied to utilize an artificial intelligence (AI) technology such as machine learning (ML) for control, management, and so on of a network/device.

As a use case of utilizing an AI model, AI-based positioning and so on have been studied. In such utilization of AI, introduction of a plurality of types of life cycle management (LCM) has been studied, but there is a case where this is not sufficiently studied. If this study is not sufficient, suitable overhead reduction/channel estimation/resource utilization cannot be performed, and improvement in communication throughput/communication quality may be suppressed.

Therefore, an object of the present disclosure is to provide a terminal, a radio communication method, and a base station capable of implementing suitable overhead reduction/channel estimation/resource utilization.

### Solution to Problem

A terminal according to an aspect of the present disclosure includes: a receiving section configured to receive information regarding additional conditions or performance monitoring for a certain model or functionality; and a control section configured to control monitoring of the additional conditions or performance monitoring based on the information, in which the control section determines execution of monitoring of the additional conditions based on a result of the performance monitoring.

### Advantageous Effects of Invention

According to an aspect of the present disclosure, suitable overhead reduction/channel estimation/resource utilization can be realized.

### Brief Description of Drawings

[FIG. 1] Fig. 1 is a diagram illustrating an example of a framework of management of an AI model.
[FIG. 2] Fig. 2 is a diagram illustrating an example of designation of the AI model.
[FIG. 3] Fig. 3 is a diagram illustrating an example of a UE positioning method.
[FIG. 4] Fig. 4 is a diagram illustrating an example of the UE positioning method.
[FIG. 5] Fig. 5 is a diagram illustrating an example of the UE positioning method.
[FIG. 6] Fig. 6 is a diagram illustrating an example of the UE positioning method.
[FIG. 7] Fig. 7 is a conceptual diagram illustrating a correspondence relationship between conditions/additional conditions of the present disclosure.
[FIG. 8] Fig. 8 is a conceptual diagram illustrating the correspondence relationship between the conditions/additional conditions of the present disclosure.
[FIG. 9] Fig. 9 is a diagram illustrating an example of monitoring according to a first embodiment.
[FIG. 10] Fig. 10 is a diagram illustrating an example of monitoring according to Aspect 2-1.
[FIG. 11] Fig. 11 is a diagram illustrating an example of monitoring according to Aspect 2-2.
[FIG. 12] Fig. 12 is a diagram illustrating an example of monitoring according to Aspect 2-3.
[FIG. 13] Fig. 13 is a diagram illustrating an example of a schematic configuration of a radio communication system according to one embodiment.
[FIG. 14] Fig. 14 is a diagram illustrating an example of a configuration of a base station according to one embodiment.
[FIG. 15] Fig. 15 is a diagram illustrating an example of a configuration of a user terminal according to one embodiment.
[FIG. 16] Fig. 16 is a diagram illustrating an example of a hardware configuration of the base station and the user terminal according to one embodiment.
[FIG. 17] Fig. 17 is a diagram illustrating an example of a vehicle according to one embodiment.

### Description of Embodiments

### (Application of Artificial Intelligence (AI) Technology to Radio Communication)

For future radio communication technologies, it is studied to utilize an AI technology such as machine learning (ML) for control, management, and so on of a network/device.

For example, it has been studied that a terminal, a user terminal, and user equipment (UE)/base station (BS) utilize AI technology in order to improve feedback of channel state information (CSI) (for example, overhead reduction, accuracy improvement, prediction), improve beam management (for example, accuracy improvement, prediction in time/space domain), and improve location measurement (for example, improvement of location estimation/prediction).

The AI model may output at least one piece of information, such as an estimated value, a predicted value, a selected action, a classification, or the like, based on the input information. The UE/BS may input channel state information, reference signal measurement, and so on, to the AI model and output high-accuracy channel state information/measurement/beam selection/location, future channel state information/radio link quality, and so on.

Note that, in the present disclosure, AI may be interchangeably used with an object (also called target, subject, data, function, program, and so on) having at least one of the following features (implementation):
· estimation based on observed or collected information;
· selection based on observed or collected information; and
· prediction based on observed or collected information.

In the present disclosure, estimation, prediction, and inference may be interchangeably used with each other. Furthermore, in the present disclosure, "estimate, predict, and infer" may be interchangeably used with each other.

In the present disclosure, the object may be, for example, an apparatus such as UE or BS, a device, or the like. Furthermore, in the present disclosure, the object may correspond to a program/model/entity that operates in the device.

Furthermore, in the present disclosure, the AI model may be interchangeably used with an object having at least one of the following characteristics (implementation):
· feed information to produce an estimated value;
· predict an estimated value by providing information;
· find a feature by giving information; and
· select an action by providing information.

Furthermore, in the present disclosure, the AI model may mean a data-driven algorithm that applies the AI technology and generates a set of outputs based on the set of inputs.

Furthermore, in the present disclosure, an AI model, a model, an ML model, predictive analytics, a predictive analysis model, a tool, a self-encoder (autoencoder), an encoder, a decoder, a neural network model, an AI algorithm, a scheme, and so on may be interchangeably used with each other. In addition, the AI model may be derived using at least one of regression analysis (for example, linear regression analysis, multiple regression analysis, and logistic regression analysis), a support vector machine, a random forest, a neural network, deep learning, or the like.

In the present disclosure, the autoencoder may be interchangeably used with any autoencoder such as a stacked autoencoder or a convolutional autoencoder. The encoder/decoder of the present disclosure may adopt a model such as Residual Network (ResNet), DenseNet, or RefineNet.

Furthermore, in the present disclosure, an encoder, encoding, encode/encoded, correction/change/control by the encoder, compressing, compress/compressed, generating, generate/generated, and so on may be interchangeably used with each other.

Furthermore, in the present disclosure, a decoder, decoding, decode/decoded, correction/change/control by the decoder, decompressing, decompress/decompressed, reconstructing, reconstruct/reconstructed, and so on may be interchangeably used with each other.

In the present disclosure, a layer (for the AI model) may be interchangeably used with a layer (input layer, intermediate layer, and so on) utilized in the AI model. The layer of the present disclosure may correspond to at least one of the input layer, the intermediate layer, an output layer, a batch normalization layer, a convolution layer, an activation layer, a dense layer, a normalization layer, a pooling layer, an attention layer, a dropout layer, a fully connected layer, and so on.

In the present disclosure, a training method of the AI model may include supervised learning, unsupervised learning, reinforcement learning, federated learning, and so on. The supervised learning may refer to a process of training a model from inputs and corresponding labels. The unsupervised learning may refer to a process of training a model without labeled data. The reinforcement learning may refer to a process of training a model from an input (in other words, a state) and a feedback signal (in other words, a reward) resulting from an output of the model (in other words, an action) in an environment with which the model is interacting.

In the present disclosure, generation, calculation, derivation, and so on may be interchangeably used with each other. In the present disclosure, implementation, operation, action, execution, and so on may be interchangeably used with each other. In the present disclosure, training, learning, updating, retraining, and so on may be interchangeably used with each other. In the present disclosure, inference, after-training, actual utilization, real utilization, and so on may be interchangeably used with each other. In the present disclosure, signals may be interchangeably used with signals/channels.

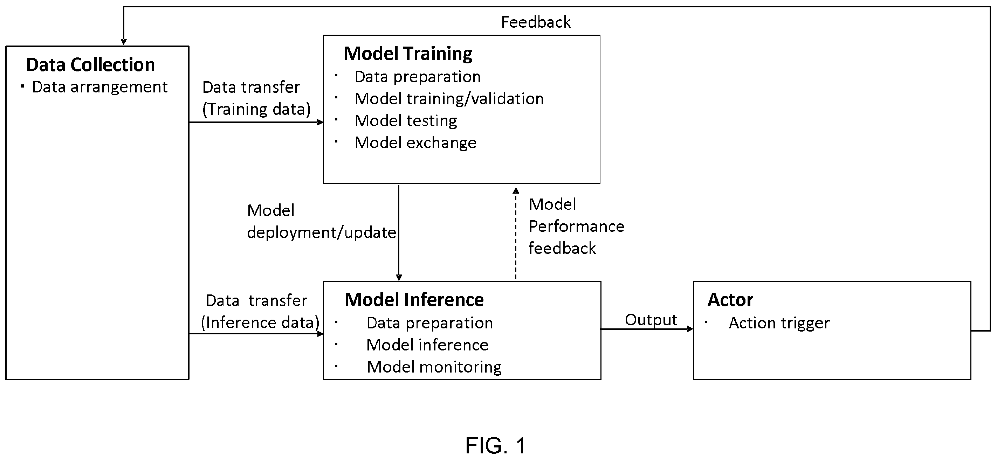

Fig. 1 is a diagram illustrating an example of a framework of management of an AI model. In this example, each stage associated with the AI model is shown in blocks. This example is also expressed as Life Cycle Management (LCM) of the AI model.

A data collection stage corresponds to a stage of collecting data for generation/update of the AI model. The data collection stage may include data organization (for example, determining which data to transfer for model training/model inference), data transfer (for example, data is transferred to an entity (for example, UE, gNB) that performs model training/model inference), and so on.

It should be noted that data collection may mean processing in which data is collected by a network node, a management entity, or UE for the purpose of AI model training/data analysis/inference. In the present disclosure, processes and procedures may be interchangeably used with each other. Also, in the present disclosure, the data collection may also mean obtaining datasets (for example, usable as input/output) for training/inference of the AI model based on measurements (channel measurements, beam measurements, radio link quality measurements, location estimation, and so on).

In the present disclosure, off-line field data may be data collected from a field (real world) and used for offline training of the AI model. Furthermore, in the present disclosure, on-line field data may be data collected from a field (real world) and used for on-line training of the AI model.

In the model training stage, model training is performed based on data (training data) transferred from the collection stage. This stage may include data preparation (for example, performing data pre-processing, cleaning, formatting, conversion, and so on), model training/validation (validation), model testing (for example, checking whether the trained model meets performance thresholds), model exchange (for example, transfer of a model for distributed learning), model deployment/update (deploy/update a model to an entity performing model inference), and so on.

Note that the AI model training may mean processing for training an AI model by a data-driven method and acquiring a trained AI model for inference.

Furthermore, the AI model validation may mean sub-processing of training for evaluating the quality of the AI model using a data set different from the data set used for model training. The sub-processing is useful for selection of model parameters to generalize beyond the data set used for model training.

In addition, AI model testing may mean sub-processing of training for evaluating the performance of the final AI model using a data set different from the data set used for model training/validation. Note that the testing does not need to be based on subsequent model tuning unlike validation.

In the model inference stage, model inference is performed based on data (inference data) transferred from the collection stage. This stage may include data preparation (for example, performing data pre-processing, cleaning, formatting, conversion, and so on), model inference, model monitoring (for example, the performance of the model inference is monitored), model performance feedback (feedback model performance to the entity performing the model training), output (providing model output to the actor), and so on.

Note that the AI model inference may mean processing for generating a set of outputs from a set of inputs using a trained AI model.

In addition, the UE side model may mean an AI model in which the inference is completely implemented in the UE. The Network side model may mean an AI model whose inference is completely implemented in a network (for example, gNB).

In addition, the one-sided model may mean a UE-side model or a network-side model. The two-sided model may mean a paired AI model in which joint inference is performed. Here, the joint inference may include AI inference whose inference is performed jointly across the network with the UE, for example, a first part of the inference may be performed first by the UE and the remaining part may be performed by the gNB (or vice versa).

In addition, the AI model monitoring may mean processing for monitoring inference performance of the AI model, and may be interchangeably used with model performance monitoring, performance monitoring, or the like.

Note that the model registration may mean that a version identifier is given to a model, and the model is made executable (registered) by being compiled into certain hardware utilized in the inference stage. In addition, the model deployment may mean delivering (or enabling in the target) a runtime image of a fully developed and tested model (or an image of an execution environment) to a target on which inference is to be performed (for example, UE/gNB).

The actor stage may include an action trigger (for example, determining whether or not to trigger an action on another entity), feedback (for example, information necessary for training data/inference data/performance feedback is fed back), and so on.

Note that, for example, training of the model for mobility optimization may be performed in, for example, maintenance and operation management (Operation, Administration and Maintenance (Management) (OAM))/gNodeB (gNB) in a network (Network (NW)). In the former case, interoperability, mass storage, operator manageability, and model flexibility (such as feature engineering) are advantageous. In the latter case, it is advantageous in that latency of model update, data exchange for model deployment, and so on are unnecessary. The inference of the model may be performed, for example, in the gNB.

Depending on the use case (in other words, the function of the AI model), the entity performing the training/inference may be different. The function of the AI model may include beam management, beam prediction, an autoencoder (or information compression), CSI feedback, location positioning, and so on.

For example, for the AI-assisted beam management based on the measurement report, the OAM/gNB may perform model training, and the gNB may perform model inference.

For the AI-assisted UE assisted positioning, a location management function (LMF) may perform model training, and the LMF may perform model inference.

For CSI feedback/channel estimation using an autoencoder, OAM/gNB/UE may perform model training and gNB/UE may perform (joint) model inference.

For AI-assisted beam management or AI-assisted UE-based positioning based on beam measurement, OAM/gNB/UE may perform model training and UE may perform model inference.

Note that model activation may mean enabling an AI model for a certain function. Model deactivation may mean deactivating the AI model for a certain function. Model switching may mean deactivating a currently active AI model for a certain function and activating a different AI model.

In addition, the model transfer may mean that the AI model is delivered on the air interface. The delivery may include delivering one or both of a parameter of a model structure known at the receiver or a new model having the parameter. This delivery may also include a complete or partial model. The model download may mean model transfer from the network to the UE. The model upload may mean model transfer from the UE to the network.

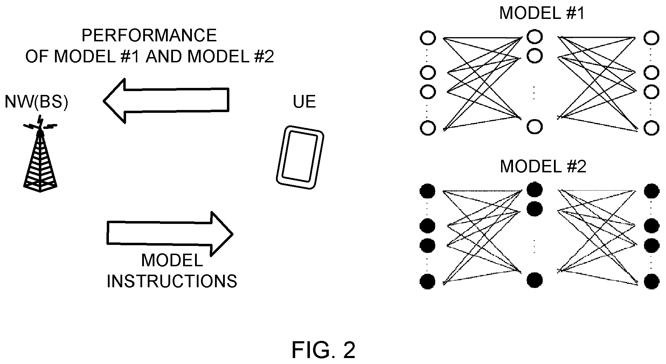

Fig. 2 is a diagram illustrating an example of designation of the AI model. In this example, the UE and the NW (for example, a base station (BS)) can recognize the models #1 and #2 (the model details may not be completely understood). The UE may report, for example, the performance of the model #1 and the performance of the model #2 to the NW, and the NW may instruct the UE about the AI model to be utilized.

### (UE Positioning Using AI Technology)

Fingerprinting localization for estimating a location of a radio device using a propagation characteristic of a radio signal is widely utilized in both Line Of Site (LOS)/Non-Line Of Site (NLOS) scenarios.

In the present disclosure, the LOS may mean that the UE and the base station are in an environment where they can see each other (or there is no shielding), and the NLOS may mean that the UE and the base station are not in an environment where they can see each other (or there is a shielding).

In the fingerprinting localization, the location of the UE is estimated from fingerprints of a plurality of transmission paths (multipaths) of the UE based on a database/AI model.

The multipath information may be, for example, information regarding an angle of arrival (AoA)/an angle of departure (AoD) of a signal on an optimal/candidate transmission path.

Note that, in the present disclosure, the information regarding the AoA may include, for example, information regarding at least one of azimuth angles of arrival and zenith angles of arrival. Furthermore, the information regarding the AoD may include, for example, information regarding at least one of the azimuth angles of departure and the zenith angles of departure.

In the 3GPP Rel. 16 NR, the following positioning technologies are supported:
· positioning based on DL/UL Time Difference Of Arrival (TDOA);
· positioning based on angle (DL AoD/UL AoA);
· positioning based on a multiple round trip time (RTT); and
· positioning based on Enhanced Cell ID (E-CID).

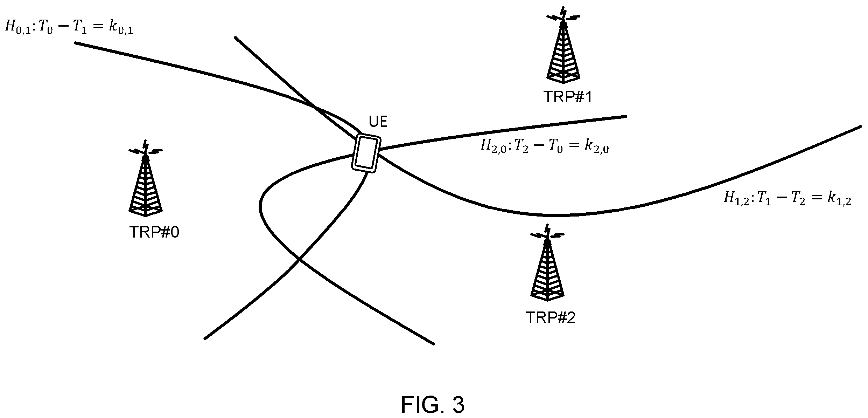

Fig. 3 is a diagram illustrating an example of positioning based on DL/UL TDOA. For example, it is assumed that a plurality of base stations (TRPs #0-#2) are arranged around the UE. In this positioning method, the location of the UE is estimated (measured) by using a measurement value of a reference signal time difference (RSTD). For example, a hyperbola H_{i,j} can be drawn by connecting points at which RSTD (Tᵢ-Tⱼ) for two certain base stations (TRP#i, #j (i and j are integers)) takes a certain value (k_{i,j}). The intersection of multiple such hyperbolas (in this example, an intersection point of H_{0,1}, H_{1,2}, and H_{2,0}) may be estimated as the location of the UE. Further, the location of the UE may be additionally estimated using the RSRP of the reference signal.

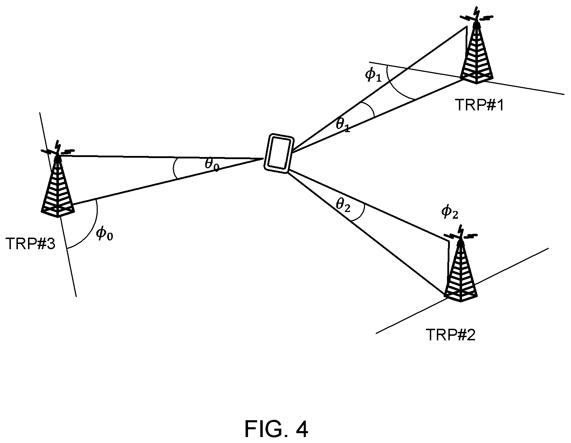

Fig. 4 is a diagram illustrating an example of positioning based on DL AoD/UL AoA. In this positioning method, the location of the UE is estimated using the measurement value of DL AoD (for example, θ or φ) or the measurement value of UL AoA (for example, θ or φ). In addition, the location of the UE may be estimated by using RSRP.

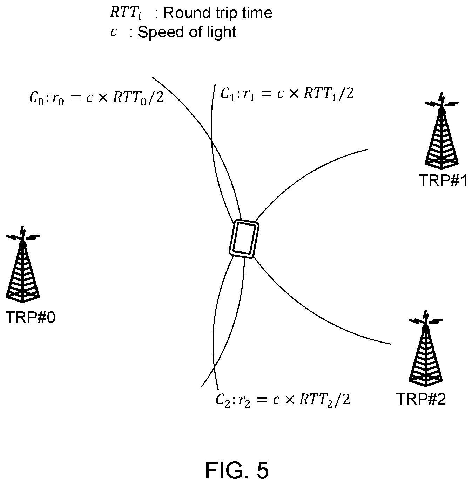

Fig. 5 is a diagram illustrating an example of the positioning based on multiple RTTs. In this positioning method, the location of the UE is estimated by using a plurality of RTTs calculated from a Tx/Rx time difference (and additionally RSRP, RSRQ, or the like) of the reference signal. For example, a geometric circle based on the RTT can be drawn around each base station. An intersection of the plurality of circles may be estimated as the location of the UE.

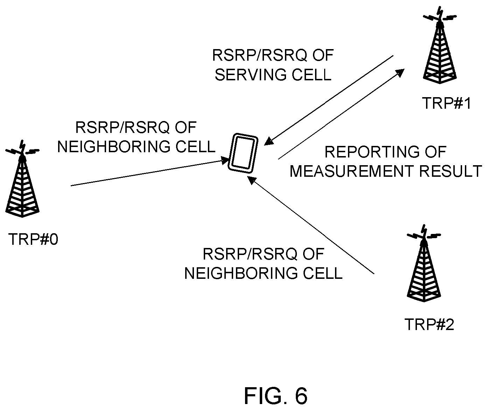

Fig. 6 is a diagram illustrating an example of positioning based on E-CID. In this positioning method, a location of the UE is estimated based on a geometric location of a serving cell/a neighboring cell (neighbor cell) and an additional measurement result (Tx-Rx time difference, RSRP, RSRQ, and so on).

The positioning in the DL (DL TDOA, DL AoD) may be performed on the UE side or the LMF side. For example, in the UE-based positioning, the UE may calculate the UE location based on various measurement results of the UE and assistance information (assistance information) from the LMF. In addition, in UE assisted positioning, the UE may report various measurement results to the LMF, and the LMF may calculate the location of the UE. The assistance information may be information for assisting the location estimation of the UE.

The positioning in the UL (UL TDOA, UL AoA) may be performed on the LMF side. In this case, the base station may report various measurement results to the LMF, and the LMF may calculate the location of the UE.

The positioning in the DL and the UL (Multi-RTT, E-CID) may be performed on the LMF side. In this case, the UE/base station may report various measurement results to the LMF, and the LMF may calculate the location of the UE.

Further, in 3GPP Rel. 17, a positioning method using assistance information is proposed for the purpose of further improving positioning accuracy. The assistance information may be transmitted among the UE, the base station, and the LMF as the measurement information for DL/UL-TDOA, DL-AoD/UL-AoA, multi-RTT, and E-CID described above.

The assistance information may include information regarding at least one of:
· Timing Error Group (TEG);
· RSRPP (path-specific RSRP);
· expected angle;
· adjacent beam information;
· TRP antenna/beam information;
·LOS/NLOS indicator; and
· additional path reporting.

The TEG may indicate one or a plurality of PRS (Positioning Reference Signal) resources in which a transmission/reception timing error (Rx/Tx timing errors) is within a certain margin.

The RSRPP may indicate a measurement result of RSRP in the first path.

In the UL positioning, assistance information regarding the expected angle may indicate an expected UL-AoA/ZoA (expected UL-AoA/ZoA). The assistance information may be transmitted from the LMF to the base station. Further, the assistance information may support positioning of at least one of UL TDOA, UL AoA, and multi-RTT.

In the DL positioning, the assistance information regarding the expected angle may include information regarding expected DL-AoA/ZoA (expected DL-AoA/ZoA) or DL-AoD/ZoD (expected DL-AoD/ZoD). The assistance information may be transmitted from the LMF to the UE. Further, the assistance information may support positioning of at least one of DL TDOA, DL AoA, and multi-RTT. This improves accuracy of angle-based UE positioning, and enables optimization of Rx beamforming of the UE or the base station.

Note that the assistance information regarding the expected angle may include information indicating an uncertainty range of these values in addition to the information regarding the values of AoA/ZoA/AoD/ZoD itself as described above.

As additional beam information, the adjacent beam information may include information regarding a subset of DL-PRS resources intended for DL-AoD report prioritization (Option 1), or a boresight direction (Option 2) of each DL-PRS resource. This allows optimization of Rx beam sweeping and DL-AoD measurements of the UE.

Further, as additional beam information, the assistance information may include PRS beam pattern information. The PRS beam pattern information may include information regarding relative power between DL-PRS resources for each angle for each TRP.

The LOS/NLOS indicator may indicate information related to LINE OF SITE (LOS)/Non-Line Of Site (NLOS).

In addition, for the purpose of improving a positioning delay of the UE, a pre-configured measurement gap (MG), activation of the MG via a lower layer, an MG-less position, PRS Rx/Tx in an RRC_INACTIVE state, on-demand PRS, or the like may be configured for the UE (may be utilized by the UE).

In 3GPP Rel. 17 NR, it is agreed that UE measures/reports RSRP of a neighboring beam, to improve location estimation accuracy of the UE. For example, in a UE assisted DL AoD positioning method (UE-assisted DL-AoD positioning method), the LMF may indicate at least one of the following options 1 to 2 included in the assistance information.

· Option 1: a subset of PRS resources intended for DL-AOD reporting prioritization. The subset may be configured for each PRS resource according to the UE capability. The UE may include the required PRS measurements for the subset of PRSs in the additional measurements of the DL-AoD if the required PRS measurements for the associated PRS are reported. The required PRS measurement may be DL PRS RSRP/path PRS RSRP. The UE may report PRS measurements only for the subset of PRS resource. Note that the subset associated with the PRS resource may be in the same/different PRS resource set as the PRS resource.
· Option 2: information regarding a boresight direction that is configured for each PRS resource according to the UE capability.

In the 3GPP Rel. 16 NR, it is agreed that the expected RSTD and its uncertainty range are indicated from the LMF to the UE. Further, in Rel. 17, it is agreed that the expected angle and its range of uncertainty are indicated from the LMF to the UE in order to reduce errors and complexity in measuring AoA/AoD.

In the 3GPP Rel. 17 NR, introduction of a positioning reference unit (PRU) is studied for positioning. A PRU is what is discussed as a reference device with a known location to mitigate the Rx/Tx timing errors of a UE/gNB. The PRU may be interchangeably used with UE/gNB/transmission reception point (TRP)/transmission point (TP).

For example, the PRU may support at least one of the following:
· measuring DL PRS and reporting relevant measurements (for example, RSTD/transmission/reception time difference/RSRP) to LMF;
· transmitting an SRS, allowing a TRP to measure and report measurement values associated with a reference device (for example, Relative Time of Arrival: RTOA/transmission/reception time difference, AOA) to the LMF;
· operation, measurement, various parameters (parameters related to transmission/reception timing delay, AoD and AOA enhancement, and calibration of measurements);
· if the LMF does not have location coordinate information, reporting the location coordinate information of the reference device to the LMF;
· the reference device whose location is known is a UE/gNB; and
· accuracy with which the location of the reference device can be known.

Positioning using an AI model has, for example, the following two use cases:
· direct AI/ML Positioning; and
· AI/ML Assisted Positioning.

According to direct AI/ML positioning, for example, UE positioning (UE position) is output. According to the AI/ML assisted positioning, for example, an intermediate feature is output. The intermediate feature may be input to the AI/ML model again.

At least one of the following may be included as an output example of the above-described AI/ML assisted positioning:
· identification of LOS/NLOS (probability of LOS/NLOS);
· ToA (time of arrival of PRS/SRS);
· Rx-Tx (transmission and reception) time difference;
· AoA/AoD;
· number of waves, Rx-Tx (transmission and reception) phase difference (Phase measurement of Rel. 18);
· DL RSTD/UL TDOA;
· DL-PRS/UL-SRS, RSRPs/RSRPPs; and
· likelihood of the above numerical value (for example, probability of ToA).

### (Beam Information for UE Positioning)

As described above, antenna (arrangement) configuration/beam information is considered useful for AI/Ml models.

The following scenarios A and B are considered as scenarios in which the antenna (arrangement) configuration/beam information is utilized.

### [Scenario A]

A more appropriate AI model is selected based on the antenna configuration/frequency/area.

### [Scenario B]

The AI model requires metadata (antenna configuration information/beam information) as input to provide better performance.

The existing specification supports that assistance information of beam information of a base station (gNB) from a network (NW) to UE is only utilized for positioning.

The following are studied for future radio communication methods:
· use beam information for beam management;
· use the beam information similarly in an interface other than the positioning protocol (for example, LTE Positioning Protocol (LPP));
· use the beam information of RS other than a positioning reference signal (PRS) for positioning; and
· use the beam information (of the UE) at the UE.

In Rel. 17, the beam information indicating a beam direction (boresight direction) for each PRS is supported as beam information (beam information for UE-based positioning, information regarding a transmission beam of the base station) from the LMF to the UE. The beam information may be information indicating a boresight direction for each PRS.

The beam information indicating the direction of the beam for each PRS is "DL-PRS-BeamInfoElement" included in "NR-DL-PRS-BeamInfo" of the common NR positioning information element.

The "DL-PRS-BeamInfoElement" includes information regarding an azimuth angle and information regarding an elevation angle of a beam transmitted from a base station (TRP).

The information regarding the azimuth angle is "dl-PRS-Azimuth" and "dl-PRS-Azimuth-fine". "dl-PRS-Azimuth" is information indicated by a value from 0° to 359° in units of 1°, and "dl-PRS-Azimuth-fine" is information indicated by a value from 0° to 0.9° in units of 0.1°.

The information regarding the elevation angle is "dl-PRS-Elevation" and "dl-PRS-Elevation-fine". "dl-PRS-Elevation" is information indicated with a granularity of 1° and a value from 0° to 180°, and "dl-PRS-Elevation-fine" is information indicated with a granularity of 0.1° and a value from 0° to 0.9°.

Further, in Rel. 17, the beam information indicating the relative power of DL PRS for each angle (azimuth angle/elevation angle) is supported as beam information (beam information for UE-based positioning, information regarding transmission beam of base station) from LMF to UE.

The beam information indicating the relative power is included in the beam antenna information ("NR-TRP-BeamAntennaInfo") of the TRP in the common NR positioning information element.

"NR-TRP-BeamAntennaInfo" includes information "NR-TRP-BeamAntennaInfoAzimuthElevation" regarding beam antenna information of the TRP with respect to an azimuth angle and an elevation angle.

"NR-TRP-BeamAntennaInfoAzimuthElevation" includes "azimuth" indicating an azimuth angle of granularity in units of 1°, "azimuth-fine" indicating an azimuth angle of granularity in units of 0.1°, and a list of elevation angles "elevationList".

The list of elevation angles "elevationList" includes "elevation" indicating an elevation angle of granularity in units of 1°, "elevation-fine" indicating an elevation angle of granularity in units of 0.1°, and a list of beam powers "beamPowerList".

The list "beamPowerList" of the beam powers includes "nr-dl-prs-ResourceSetID" indicating the resource set ID of the DL PRS, "nr-dl-prs-ResourceID" indicating the resource ID of the DL PRS, "nr-dl-prs-RelativePower" indicating the relative power of the resource given by "nr-dl-prs-ResourceID" at the granularity of 1dB, and "nr-dl-prs-RelativePowerFine" indicating the relative power of the resource given by "nr-dl-prs-ResourceID" at the granularity of 0.1dB.

Further, in Rel. 17, information indicating an antenna reference point (ARP) is supported as beam (antenna) information (information regarding a transmission beam of a base station) from the LMF to the UE.

The information is indicated by "referencePoint" in "NR-TRP-LocationInfo" which is location information of the TRP of the common NR positioning information element.

The location information "NR-TRP-LocationInfo" of the TRP is expressed by the relative location between the reference point and the reference point.

A location of the ARP of the PRS resource is expressed by a relative location associated with the ARP location of the PRS resource set.

The antenna reference points are indicated by altitude, latitude, and longitude.

Further, in Rel. 17, information regarding a spatial direction of DL PRS is supported as information regarding LMF from a base station (for example, a gNB, an NG-RAN (Next Generation-Radio Access Network) node) (information regarding a transmission beam of the base station).

The information includes information indicating a boresight direction of an azimuth angle and an elevation angle of the PRS resource.

Furthermore, the information includes transition information from a local coordinate system (LCS) to a global coordinate system (GCS).

The GCS may be defined for a system including a plurality of base stations and a plurality of UEs. In the LCS, an array antenna for one base station or one UE may be defined.

The LCS is used as a reference to define a vector far-field of each antenna element in the array. The vector far-field is a pattern and polarization. The arrangement of the arrays in the GCS may be defined by the conversion between the GCS and the LCS. The GCS/LCS may be derived based on, for example, a definition and a conversion formula (defined in the specification) that can be recognized by a person skilled in the art.

Further, in Rel. 17, information indicating a TRP beam/antenna is supported as information from a base station (for example, gNB) to an LMF (information regarding a transmission beam of the base station).

The information includes information indicating the relative power of DL PRS at each angle (azimuth angle/elevation angle).

In addition, in Rel. 17, information regarding a reception beam at the time of UL signal measurement is supported as information regarding LMF from a base station (for example, gNB) (information regarding a reception beam of the base station).

The information includes at least one of a PRS resource ID, a PRS resource set ID, and an SSB index.

Furthermore, in Rel. 17, information regarding a spatial relation is supported as information transmitted from the UE to the NW (information regarding a transmission beam of the UE).

The information indicates an ID/index of a certain RS (for example, SSB/CSI-RS/SRS/DL PRS).

In addition, in Rel. 17, the number of reception beams of the UE in positioning beam sweeping is specified. The UE may report UE capability support to the LMF.

For example, in FR1, the UE uses one reception beam.

In FR2, when the UE supports a certain UE capability, the number of beams having a value indicated by the information "numberOfRxBeamSweepingFactor" indicating the number of Rx beam sweeping factors for FR2 is used. Otherwise, the UE uses eight reception beams.

In addition, information regarding the reception beam used by the UE for measurement (for example, "nr-DL-PRS-RxBeamIndex") is supported.

For that information, if different beams are used in the DL PRS resource set, the UE may report measurements received on the same reception beam.

In other words, the beam information transmitted by the UE is information indicating whether the same beam is used between resource sets.

### (UE-based DL Positioning)

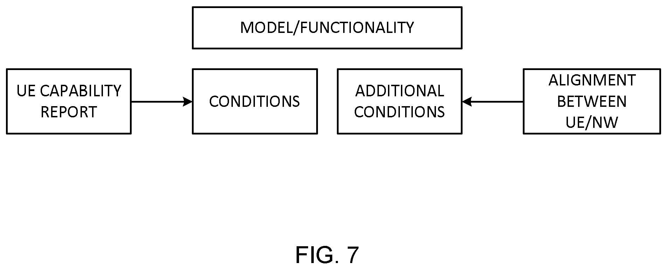

A case where the UE performs positioning in the AI model on the UE side will be described. Fig. 7 is a diagram illustrating an example of UE-based DL positioning. The UE may use the AI model to infer UE positioning (UE location positioning, location). The UE may report the inferred positioning result to the LMF.

The inference of the AI model in the UE may be performed based on a data set included in the UE. The information (input information) input for the AI model may include raw data (information regarding features)/assistance information measured by the UE. The UE may receive assistance information from the base station or the LMF.

The raw measurement result (which may be referred to as a measured feature) measured by the UE may include data (information) on at least one of the following (note that the information listed by a comma does not need to be all included. The same applies hereinafter):
· UE DL-PRS-RSRP (or DL-PRS-RSSI/RSRQ) measurement results of a plurality of reference TRPs;
· DL-RSTD measurement results of a plurality of reference TRPs;
· time of arrival (ToA) measurement result of the reference TRP;
· AoD measurement result of the reference TRP;
· quality of various measurements;
· time stamp (time) of the measurement results;
· a physical cell ID (PCI), a global cell ID (GCI), an absolute radio frequency channel number (ARFCN), a PRS resource ID, a PRS resource set ID, and a PRS ID in each measurement;
· UE Rx TEG ID, TRP Tx TEG ID, UE Tx TEG ID, UE RxTx TEG ID, TRP Rx TEG ID, TRP RxTx TEG ID for DL RSTD measurement;
· DL-PRS reception beam index;
· a first path DL-PRS-RSRP measurement result;
· channel impulse response/channel frequency response, coded channel impulse response/coded channel frequency response;
· phase differences at different antennas in the antenna array; and
· reception multipath features of reference TRPs (for example, path DL-PRS-RSRP measurement results, amplitude/mean/cumulative distribution function (CDF) of estimated multipath amplitude, path loss, root-mean-square (rms) delay spread, kurtosis of channel impulse response.

Note that GCI may be interchangeably used with NR Cell Global Identity (NCGI).

The assistance information notified from the base station/LMF may include information on at least one of the following:
· noise (such as expected variance of noise) of the correct (ground truth) data set;
· a physical cell ID (PCI), a global cell ID (GCI), ARFCN, and a PRS ID of the NR TRP candidate to be measured;
· relative timing (Timing relative) of the NR TRP candidate with serving (reference) TRP;
· SSB information of the TRP (time/frequency occupancy of the SSB);
· DL-PRS configuration of candidate NR TRPs;
· spatial direction information (azimuth angle, elevation angle, and so on) of a DL-PRS resource of TRP provided by the base station;
· geographical coordinates (including transmission reference location for each DL-PRS resource ID, reference location of transmission antenna of reference TRP, and reference location of transmission antenna of other TRPs) of the TRP provided by the base station;
· fine timing relative to the serving (reference) TRP of the candidate NR TRP;
· PRS dedicated transmission point indication (TP indication);
· association information of a TRP Tx TEG ID and a DL-PRS resource;
· information on the LOS/NLOS for each measurement of DL-PRS-RSRP/DL-PRS-RSSI/DL-RSTD/ToA/AoD/phase difference;
· on-demand DL-PRS configuration;
· TRP beam/antenna information (including bearing angle, zenith angle, relative power between PRS resources per angle at each TRP);
· assistance information of an expected angle; and
· PRS priority list.

The above-described correct (ground truth) data set may be interchangeably used with a data set representing location information used for training/validation/testing of AI.

The UE may output the UE location from the AI model. The above AI model on the UE side having the UE location as an output is also applicable to UL-based positioning, DL UL-based positioning, and so on. These inputs may include, for example, UE/gNB measurement results, extracted features, or the like, may include features extracted on the gNB side, or may include features extracted on the LMF side.

### (Classification of Positioning)

Positioning using the AI model may be classified as follows:
(1) UE-based positioning;
(2) AI/ML assisted positioning; and
(3) NG-RAN (Next Generation-Radio Access Network) node assisted positioning.

(1) UE-based positioning may be further classified as follows:
   (1-1) Direct AI/ML positioning in a UE-side model; and
   (1-2) AI/ML assisted positioning in the UE-side model, and non-AI-based positioning in a UE-side algorithm.
(2) AI/ML assisted positioning can be further classified as follows:
   (2-1) AI/ML assisted positioning in the UE-side model and non-AI-based positioning in the LMF-side algorithm; and
   (2-2) Direct AI/ML positioning in the LMF-side model.
(3) NG-RAN node assisted positioning can be further classified as follows:
   (3-1) AI/ML assisted positioning in the gNB-side model and non-AI-based positioning in the LMF-side algorithm; and
   (3-2) Direct AI/ML positioning in the LMF-side model.

For each positioning described above, the following contents are studied:
· a type of measurement (new measurement/existing measurement) as a model inference input;
· in the positioning in (1) and (2) above, it is assumed that the UE measures as a model inference input;
· in the positioning in (3) above, it is assumed that the TRP (gNB/LMF) measures as a model inference input;
· report a measurement result as a model inference input to an LMF of an LMF-side model (2-2, 3-2);
· in AI/ML assisted positioning, new measurement report/existing measurement report may be extended as a model output for UE assisted (2-1) and NG-RAN node assisted positioning (3-1) to LMF; and
· extension of the assistance signaling/procedure to facilitate the model inference of both UE-side model and NW-side model.

Each positioning described in (1) to (3) above may be generally referred to as AI/ML-based positioning. That is, the positioning using the AI model, each positioning described above, and AI/ML-based positioning (AI-based positioning) may be interchangeably used with each other.

### (KPI)

Regarding performance monitoring of the AI model, a common key performance indicator (KPI) has been studied.

The following shows an initial list of common KPIs for evaluating the performance effect by the AI/ML model:
· performance;
· intermediate KPI;
· link-level and system-level performance;
· generalization performance;
· over-the-air overhead;
· overhead of assistance information;
· overhead of data collection (collection);
· model delivery/transfer overhead;
· signaling overhead associated with other AI/ML models;
· inference complexity;
· computational complexity of model inference: floating point operations (FLOPs (note that s is a lower case character)) (this means the floating point operation amount);
· computational complexity of pre-post processing;
· complexity of the model (number of parameters/data size (for example, Mbyte));
· training complexity;
· LCM related complexity and storage overhead; and
· latency (for example, inference latency).

Note that the above-described KPI is merely an example, and another KPI (for example, KPIs associated with model training, use case specific KPIs considered for a given use case, and so on) may be added to the list.

### (Performance Metrics Regarding Positioning)

In the positioning in Rel. 17, it is specified that the following metrics are applied for performance evaluation (TR 38.857). Note that the percentiles of the positioning errors may be 50%, 67%, 80%, and 90%.

### · Horizontal Accuracy

The horizontal accuracy may indicate a difference between the calculated horizontal location of the UE and the actual horizontal location of the UE. For example, the horizontal accuracy may be less than 0.2 meters at 90% UE.

### · Vertical Accuracy

The vertical accuracy may indicate a difference between the calculated vertical location of the UE and the actual vertical location of the UE. For example, the vertical accuracy may be less than 1 meter at 90% UE.

### · Latency

The latency may be, for example, an end-to-end latency for location estimation of the UE. The latency may be less than 100 milliseconds (more preferably on the order of 10 milliseconds). The latency may include processing delays of various related nodes (UE, gNB, AMF, LMF, and so on) and signaling delays between nodes. Other latencies may include physical layer latencies for UE location estimation. The latency may be, for example, less than 10 milliseconds.

For performance metrics for model monitoring, at least one of the following may be used:
· performance;
· latency; and
· complexity.

The performance may include at least one of the following:
· horizontal accuracy (meters) for AI/ML-based positioning;
· vertical accuracy (meters) of AI/ML-based positioning; and
· accuracy of intermediate feature for AI/ML-based positioning.

The horizontal accuracy may indicate a difference between the calculated horizontal location of the UE and the actual horizontal location of the UE. For example, the horizontal accuracy may be less than 0.2 m at 90% UE.

The vertical accuracy may indicate a difference between the calculated vertical location of the UE and the actual vertical location of the UE. For example, the vertical accuracy may be less than 1 m at 90% UE.

The intermediate feature accuracy may indicate a difference between an inferenced intermediate value and an intermediate value derived based on an actual UE location. The intermediate feature accuracy may be indicated by, for example, at least one of accuracy (error rate%) of a LOS/NLOS indicator, ToA (milliseconds), AoA (degrees), RSTD (milliseconds), RSRP (dBm), and so on.

The latency may include at least one of the following:
· physical layer latency (ms); and
· end-to-end latency (ms).

The latency in the positioning procedure may be defined according to a given rule. The latency (start time/end time) of the physical layer may be individually defined according to a positioning manner.

For example, in the case of UE-based positioning, the start time may be any of a timing at which the UE transmits a PUSCH including an MG request (Alt1), a timing at which the gNB transmits an LPP message including assistance data by using a PDSCH (Alt2), and a timing at which the UE starts to receive a DL PRS (Alt3). In addition, the end time in this case may be a timing at which the gNB succeeds in decoding the PUSCH including the LPP provide location information message, and a timing at which the UE performs the location estimation calculation in a case where the gNB does not succeed in decoding the PUSCH.

For UE assisted positioning/LMF based positioning, the start time may be a timing at which the gNB transmits the PDSCH including an LPP request location information message. In addition, the end time in this case may be a timing at which the gNB succeeds in decoding the PUSCH including the LPP provide location information message.

In the case of the NG-RAN node assisted positioning, the start time may be a timing at which the gNB receives the NRPPa measurement request message. In addition, the end time in this case may be a timing at which the gNB transmits the NRPPa measurement response message.

Furthermore, in the latency of the AI model, for example, the timing at which the UE/NW receives the input of the model inference may be set as the start time, and the timing at which the NW/UE receives the output of the AI model may be set as the end time.

The end-to-end latency may be a latency for location estimation of the UE.

Furthermore, the latency may include a latency of an upper layer as another latency. The latency may include processing delays of various related nodes (UE, gNB, AMF, LMF, and so on) and signaling delays between nodes. Further, the definition of each latency described above may be in accordance with the definition of Rel. 17.

The complexity may be defined by the computational complexity of model inference (floating point operations (FLOPs)). Furthermore, the complexity of the AI model may be defined by, for example, the data size (Mbyte) of the model and the number of parameters related to the AI model.

### (Performance Monitoring for Positioning (Model Monitoring))

### <<Calculation of Performance Metrics>>

In the UE-based positioning, model monitoring for direct AI/ML positioning by the UE-side model may be performed by at least one of the following:
<1> Performance metrics calculation at the UE; and
<2> Performance metrics calculation in LMF.

In the UE-based positioning, model monitoring for AI/ML assisted positioning by the UE-side model may be performed by at least one of the following:
<3> Performance metric calculation in the UE; and
<4> Performance metrics calculation in LMF.

In the UE assisted positioning, model monitoring for AI/ML assisted positioning by the UE-side model may be performed by the following:
<5> Performance metrics calculation in LMF.

In the NG-RAN node assisted positioning, model monitoring for AI/ML assisted positioning by the gNB-side model may be performed by at least one of the following:
<6> Performance metric calculation in the gNB; and
<7> Performance metrics calculation in LMF.

### <<Calculation of Performance Metrics in Direct AI/ML Positioning by UE-side Model>>

The performance metrics calculation (model monitoring) of <1> described above may be performed according to the following steps:
· Step 1: the UE obtains a noisy ground-truth UE location (a true value for the UE location);
· Step 1': the UE obtains an estimated UE location from model inference;
· Step 2: the UE calculates performance metrics of the model monitoring;
· Step 3: the UE reports performance metrics of the model monitoring;
· Step 3': the UE requests the LMF for model activation/deactivation/switching;
· Step 4: the UE receives an indication of model activation/deactivation/switching from the LMF; and
· Step 5: the UE performs model activation/deactivation/switching.

The performance metrics calculation (model monitoring) of <2> described above may be performed according to the following steps:
· Step 1: the UE obtains and reports an estimated UE location from model inference;
· Step 1': the LMF obtains a noisy ground-truth UE location (a true value for the UE location);
· Step 2: the LMF calculates performance metrics of the model monitoring;
· Step 3: the UE receives an indication of model activation/deactivation/switching from the LMF; and
· Step 4: the UE performs model activation/deactivation/switching.

### <<Calculation of Performance Metrics in AI/ML Assisted Positioning by UE-side Model>>

The performance metrics calculation (model monitoring) of <3> described above may be performed according to the following steps:
· Step 1: the UE obtains noisy ground-truth data (a true value for certain data (for example, UE position));
· Step 1': the UE obtains estimated data from model inference;
· Step 2: the UE calculates performance metrics of the model monitoring;
· Step 3: the UE reports performance metrics of the model monitoring;
· Step 3': the UE requests the LMF for model activation/deactivation/switching;
· Step 4: the UE receives an indication of model activation/deactivation/switching from the LMF; and
· Step 5: the UE performs model activation/deactivation/switching.

The performance metrics calculation (model monitoring) of <4> and <5> described above may be performed according to the following steps:
· Step 1: the UE obtains and reports estimated data from model inference;
· Step 2: the LMF obtains ground-truth data (a true value for certain data (for example, UE position));
· Step 3: the LMF calculates performance metrics of the model monitoring;
· Step 4: the UE receives an indication of model activation/deactivation/switching from the LMF; and
· Step 5: the UE performs model activation/deactivation/switching.

### <<Calculation of Performance Metrics in AI/ML Assisted Positioning by gNB-side Model>>

The performance metrics calculation (model monitoring) of <6> described above may be performed according to the following steps:
· Step 1: the gNB obtains and reports estimated data from model inference;
· Step 1': the gNB obtains ground-truth data (a true value for certain data (for example, UE position));
· Step 2: the gNB calculates performance metrics of the model monitoring;

·Step 3: the gNB reports performance metrics of the model monitoring;
· Step 3': the gNB requests the LMF for model activation/deactivation/switching;
· Step 4: the gNB receives an indication of model activation/deactivation/switching from the LMF; and
· Step 5: the gNB performs model activation/deactivation/switching.

The performance metrics calculation (model monitoring) of <7> described above may be performed according to the following steps:
· Step 1: the gNB obtains and reports estimated data from model inference;
· Step 2: the LMF obtains ground-truth data (a true value for certain data (for example, UE position));
· Step 3: the LMF calculates performance metrics of the model monitoring;
· Step 4: the gNB receives an indication of model activation/deactivation/switching from the LMF; and
· Step 5: the gNB performs model activation/deactivation/switching.

### <<Application of Performance Metrics on UE side>>

When performing model inference on the NW/UE side, the UE may determine whether a requirement of the performance metrics is satisfied.

The UE may report at least one of the following pieces of monitoring information to the NW through higher layer signaling/physical layer signaling such as LPP/MAC CE/DCI/RRC/NRPPa:
· accuracy of output information of the monitored AI model;
· a difference between the inferred horizontal/vertical location and the actual horizontal/vertical position;
· a difference between the inferred output (ToA, AoA, RSTD, RSRP, and so on) and the (ToA, AoA, RSTD, RSRP, and so on) obtained from the actual position;
· a difference in latency;
· AI model and latency complexity, required complexity;
· a binary indicator indicating whether a requirement of performance metrics is satisfied;
· the calculated estimation accuracy (horizontal accuracy/vertical accuracy/intermediate feature accuracy); and
· information regarding reliability (value) of the estimation accuracy.

Also, the monitoring information described above may be reported based on at least one of the following options:
<Option 1>
   · when some of a plurality of conditions are satisfied (for example, if the performance metrics do not meet certain requirements);
<Option 2>
   · always report after monitoring (unconditionally report); and
<Option 3>
   · report based on configuration/NW instruction (for example, periodic, semi-permanent, non-periodic).

### <<Application of Performance Metrics on gNB side>>

When performing model inference on the UE/gNB/LMF side, the gNB may determine whether a requirement of the performance metrics is satisfied.

The UE/LMF may report at least one of the following output information of the AI model to the gNB/LMF through higher layer signaling/physical layer signaling such as LPP/MAC CE/DCI/RRC/NRPPa. At this time, the UE may report to the gNB through the LMF:
· inferred UE coordinates;
· inferred ToA;
· an inferred LOS/NLOS indicator;
· inferred AoA, RSTD, RSRP;
· complexity of the AI model; and
· latency.

After comparing the information reported from the UE/the information indicated from the LMF with the actual information, the gNB may indicate at least one of the monitoring information (information on the UE side) described above to the UE/LMF through higher layer signaling/physical layer signaling such as LPP/MAC CE/DCI/RRC/NRPPa.

### <<Application of Performance Metrics on LMF side>>

When performing model inference on the UE/gNB/LMF side, the LMF may determine whether a requirement of the performance metrics is satisfied.

The UE/gNB may report at least one of the following output information of the AI model to the NW through higher layer signaling/physical layer signaling such as LPP/MAC CE/DCI/RRC/NRPPa:
· inferred UE coordinates;
· inferred ToA;
· an inferred LOS/NLOS indicator;
· inferred AoA, RSTD, RSRP;
· complexity of the AI model; and
· latency.

After comparing the information reported from the UE/gNB with the actual information, the LMF may indicate at least one of the monitoring information (information on the UE side) described above to the UE/gNB through higher layer signaling/physical layer signaling such as LPP/MAC CE/DCI/RRC/NRPPa.

With respect to the application of performance metrics at the UE/gNB/LMF side described above, model monitoring and model inference are preferably done at the same entity (UE/gNB/LMF).

### <<Problems of Model Monitoring>>

Regarding the model monitoring of AI/ML-based positioning, it has been studied for which entity the calculation/application of the performance metrics described above is defined.

Regarding the monitoring of the AI/ML model in life cycle management, at least the following metrics (indices)/methods are studied for each use case:
· monitoring based on inference accuracy (including metrics associated with intermediate KPIs);
· monitoring based on system performance (including metrics related to system performance KPIs); and
· other monitoring,

<Option 1>
   · monitoring based on data delivery;
      (a) input base: for example, monitoring validity of AI/ML input (out-of-distribution detection, drift detection of input data, SNR, delay spread, and so on); and
      (b) output base: for example, drift detection of output data; and
<Option 2>
   · Monitoring based on application conditions

The metrics calculation of the model monitoring may be performed by the UE/NW.

As described above, regarding the monitoring of the AI/ML model for positioning, a calculation subject, a calculation method, a reporting method, and so on of various metrics have been studied.

### <<Subject (entity) that Derives Performance Metrics (Monitoring Metrics)>>

In addition to the above, for performance monitoring of AI/ML-based positioning, entities for deriving monitoring indicators include:
· UE for case 1/case 2a with (utilizing) UE-side model;
· gNB for case 3a with (utilizing) gNB-side model; and
· LMF for case 2b/case 3b with (utilizing) LMF-side model.

In addition, the following entities are also studied:
· LMF for case 2a (utilizing a UE-side model) and case 3a (utilizing a gNB-side model) when monitoring is performed based on at least the provided ground-truth label (or an approximation thereof).

For example, in the case 2a and case 3a, the UE-side/gNB-side model can be monitored by the UE/gNB or the LMF.

The present disclosure is not limited to the case described above, and is also applicable to a case where the model of case 1 can be monitored by the LMF-side model.

### (Life Cycle Management (LCM))

Introduction of a plurality of LCMs is studied in a future radio communication system (for example, Rel. 18 or later).

The plurality of LCMs may be an LCM based on functionality and an LCM based on a model ID. The LCM based on the functionality may be referred to as a functionality-based LCM, and the LCM based on the model ID may be referred to as a model-ID-based LCM.

In the functionality-based LCM, NW (for example, a base station/NW node) may instruct an operation (for example, at least one of activation, deactivation, fallback operation, and switch) related to the functionality of AI/ML. Here, the fallback operation may be an operation based on information (input information) used when the corresponding AI function is applied, or an operation based on information (input information) used when the corresponding AI function is applied and the non-AI function.

The UE may perform model-level LCM (for example, at least one of model switching and model selection) among the indicated functionalities.

Among the functionalities, which model is activated/deactivated may be transparent.

For notification of supported functionality, reporting of UE capability information may be used.

In the model-ID-based LCM, the NW (for example, a base station/NW node) may instruct the operation (for example, at least one of activation, deactivation, fallback operation, and switch) related to the individual AI/ML model by the model ID.

The UE may perform model-level LCM (for example, at least one of model switching and model selection) based on the indication of the NW.

The model may be defined in the NW by a model identifier (ID).

### (Case Regarding Model Delivery/Transfer)

For model delivery/transfer, when a model is trained by the NW, three cases are defined in an existing scenario.

### [Case y]

First, the NW trains the model and delivers the model to the UE outside the 3GPP network by off-line engineering of a plurality of vendors.

The UE then reports support for the delivered model (this step may be referred to as model identification).

### [Case z2]

First, the NW trains the model by the off-line engineering of the plurality of vendors and saves it in a proprietary format. The proprietary format may mean a format defined for each vendor.

The UE then reports on utilization of the stored model in the 3GPP network (this step may be referred to as model identification).

Next, model transportation is performed.

The UE then reports support for the transferred model (this step may be referred to as model identification).

### [Case z4]

First, the UE reports a supported model structure (structure) (this step may be referred to as model identification).

The NW then transfers the model parameters of the supported model structure.

The UE then reports support for the transferred model (this step may be referred to as model identification).

### (Functionality Identification)

As functionality identification procedure, for example, it is considered that the UE reports a certain condition in the UE capability (capability information). In this case, the NW may configure the corresponding functionality based on the reported condition.

Here, the functionality may represent a feature/feature group (FG) available in AI/ML enabled by a certain configuration, and may be, for example, a set of RRC parameters/LPP parameters. The configuration may be supported based on conditions indicated by the UE capability. In addition, the functionality may represent a unit that can be controlled by the UE side in the operation (activation/deactivation/switching) of the LCM by the NW.

The operation of the functionality-based LCM may be controlled based on the configuration of the feature/feature group available in the AI/ML described above. Here, signaling (signaling for activation/deactivation/switching) for supporting the operation of the functionality-based LCM has been studied.

The UE may also report applicable functionality updates. For example, a mechanism for updating an applicable model after identifying the model needs to be studied.

### (Model Identification)

The model identified by the model ID may, for example, be associated with a configuration/condition/additional condition (certain scenario, site, data set, and so on). The model may represent a unit that can be controlled by the UE side in the operation (activation/deactivation/switching) of the LCM by the NW.

The operation of the model-ID-based LCM may be controlled based on the identified model. Here, the model may be associated with certain configurations/conditions regarding the UE capability of the feature/feature group available in AI/ML, and additional conditions determined/identified between the UE side and the NW side.

In addition, it is assumed that the identification process and the control unit are different between the functionality-based LCM and the model-ID-based LCM. Here, it has been studied to share the activation/deactivation/switching procedure between the functionality-based LCM and the model-ID-based LCM.

In addition, the following types have been studied as a procedure of model identification.
· Type A: The model information and the model ID are associated without signaling. The UE reports the supported model ID to the NW. That is, the mapping of the model ID and the model information is identified by the NW and the UE without signaling. The NW and the UE identify the corresponding model information based on the received model ID.
· Type B1: the model information is reported from the UE to the NW via an air interface (signaling). The model identification is started by the UE and the NW assists (is responsible for) the remaining steps of the model identification. During the model identification, a model ID may be assigned to the model.
· Type B2: the model information is reported from the NW to the UE via an air interface (signaling). The model identification is started by the NW and the UE responds to the remaining steps of the model identification. During the model identification, a model ID may be assigned to the model.

### (Meta-Information)

The UE may receive at least one of the following as meta-information.

Note that the name "meta-information" in the present disclosure is merely an example, and the meta-information may mean at least one of certain configuration information, scenario information, environment information, assistance information, and model information. In the present disclosure, the meta-information, the configuration information, the scenario information, the environment information, the assistance information, and the model information may be interchangeably used with each other.

The meta-information utilized by the UE/NW may include at least one of information regarding NW configuration/deployment, information regarding an environment, information regarding an AL/ML model on the NW side, and information regarding a model requested by the NW.

The information regarding the NW configuration/deployment may include, for example, information regarding antenna configuration.

The information regarding the antenna configuration may indicate, for example, at least one of a number of horizontal/vertical antenna elements/panels, a number of ports, an antenna spacing, an antenna position, a panel position, and a transceiver unit (TxRU) mapping.

The information regarding the NW configuration/deployment may include, for example, information regarding beam configuration.

The information regarding the beam configuration may include, for example, at least one of a beam width, the number of beams, and a beam direction.

The information regarding the NW configuration/deployment may include, for example, information regarding TRP.

The information regarding the beam configuration may include, for example, at least one of an altitude of the TRP and a relative location of the multiple TRPs.

The information regarding the environment may include, for example, information regarding a deployment scenario.

The information regarding the deployment scenario may indicate, for example, at least one of: an urban macro (UMa), an urban micro (Umi), and an indoor hotspot (InH).

The information regarding the environment may include, for example, information regarding indoor or outdoor.

The information regarding indoor or outdoor may indicate, for example, an indoor/outdoor probability.

The information regarding the environment may be, for example, information regarding objects around the UE/base station.

The information regarding the objects around the UE/base station may indicate, for example, the arrangement of the objects around the UE/base station.

The information regarding the environment may include, for example, a scenario configuration format (meta-information) described below.

The use case using the AI model may be associated with a scenario configuration format including long-term features.

Note that the long-term features may be interchangeably used with short-term/intermediate/long-term features, simply features, or the like. Further, the scenario configuration format may be interchangeably used with meta-information, a meta-information format, a scenario and configuration format, a scenario configuration format, a scenario format, a configuration format, a use case format, an environment format, a meta format, or the like. In addition, the format may be interchangeably used with a type, a mode, data, a configuration, or the like.

The features may include a combination of one or more of the following elements:
· scenario/model (urban macro (UMa), urban micro (Umi), indoor, outdoor, indoor hotspot (InH), and so on);
· frequency/frequency range;
· numerology (or subcarrier spacing); and
· distribution/set of general channel parameters (for example, inter-site distances (ISD), gNB height, delay spread, angular spread, Doppler spread, and so on) in a single scenario/model;
· UE Distribution;
· UE speed;
· UE trajectory;
· Number of transmission beam/reception beam;
· UE rotation pattern;
· gNB/UE antenna configuration (for example, a transmitting/receiving antenna vector);
· number of cells/number of sectors;
· bandwidth;
· UE payload;
· channel quality (for example, RSRP, SINR);
· beam configuration ID;
· physical cell ID (PCI);
· global cell ID (GCI);
· absolute radio frequency channel number (ARFCN); and
· probability of Line Of Site (LOS)/Non-Line Of Site (NLOS).

The UE may be expected to be configured/registered with a model whose associated scenario configuration format matches the configuration/status of the UE.

The UE may also be expected to activate a model whose associated scenario configuration format matches the configuration/status of the UE.

The correspondence between the use case and the scenario configuration format may be defined in a standard, or information regarding the correspondence may be notified to the UE. Furthermore, the features included in the scenario configuration format corresponding to the use case may be defined in the standard, or information regarding the features may be notified to the UE.

The information regarding the AL/ML model on the NW side may include, for example, information regarding a paired model available on the NW side.

The information regarding the paired models available on the NW side may indicate, for example, a paired decoder for CSI compression.

The information regarding the AL/ML model on the NW side may include, for example, information regarding preprocessing/post-processing available on the NW side.

The information regarding the pre-processing/post-processing available on the NW side may include, for example, at least one of quantization/dequantization processing, DFT conversion, IDFT conversion, FFT conversion, and IFFT conversion.

### (UE Assistance Information)

The UE may report the assistance information/metadata (meta-information) of the AI/ML model.

The assistance information may include, for example, the following at least one piece of information (user status):
· overheating assistance information;
· DRX parameter preference;
· a priority for the maximum aggregate bandwidth; and
· preference for maximum MIMO layer number.

The AI/ML model may be an AI/ML model registered/configured/compiled/activated in the UE.

The assistance information/metadata of the AI/ML model may be transmitted together with the beam information or instead of the beam information. The beam information may be, for example, information regarding an antenna/beam of the UE.

The assistance information/metadata of the AI/ML model may be at least one piece of information described below.

The assistance information/metadata of the AI/ML model may be an ID of the AI/ML model.

The ID of the AI/ML model may be the ID of the global/local AI/ML model.

The assistance information/metadata of the AI/ML model may be information regarding an applicable bandwidth corresponding to the AI/ML model ID.

The bandwidth may be indicated as an applicable minimum/maximum bandwidth.

The information regarding the bandwidth may include, for example, information indicating a band indicator (for example, "freqBandIndicatorNR"). The information indicating the band indicator may be represented by a certain number of bits (for example, 10 bits).

The information regarding the bandwidth may include, for example, information (for example, "supportedBandwidth") indicating the bandwidth of the RS associated with the corresponding AI/ML model.

The information indicating the bandwidth of the RS associated with the corresponding AI/ML model may indicate the frequency for each frequency range (for example, FR1/FR2 (FR2-1/FR2-2)/FR3/FR4/FR5).

The assistance information/metadata of the AI/ML model may be information regarding an applicable area corresponding to the AI/ML model ID.

The information regarding the applicable area corresponding to the AI/ML model may include at least one piece of information (list of information):
· an area ID;
· a global ID of the cell (of NR);
· an identifier (ID) of the physical cell (NR);
· ARFCN (Absolute Radio Frequency Channel Number); and
· a global ID (ECGI) of Evolved Cell.

The area ID may include at least one of the global ID of a cell of NR, the physical cell ID of NR, and ARFCN.

The assistance information/metadata of the AI/ML model may be antenna configuration/beam information corresponding to the AI/ML model ID.

### (KPI)

Regarding performance monitoring of the AI model, a common key performance indicator (KPI) has been studied.

The following shows an initial list of common KPIs for evaluating the performance effect by the AI/ML model:
· performance;
· intermediate KPI;
· link-level and system-level performance;
· generalization performance;
· over-the-air overhead;
· overhead of assistance information;
· overhead of data collection (collection);
· model delivery/transfer overhead;
· signaling overhead associated with other AI/ML models;
· inference complexity;
· computational complexity of model inference: floating point operations (FLOPs (note that s is a lower case character)) (this means the floating point operation amount);
· computational complexity of pre-post processing;
· complexity of the model (number of parameters/data size (for example, Mbyte));
· training complexity;
· LCM related complexity and storage overhead; and
· latency (for example, inference latency).

Note that the above-described KPI is merely an example, and another KPI (for example, KPIs associated with model training, use case specific KPIs considered for a given use case, and so on) may be added to the list.

Among the KPIs described above, the KPI related to the performance may be referred to as a performance KPI.

### (Functionality Related Information)

The UE may report the functionality it supports (or to be supported).

The functionality may be associated with certain information. The functionality may also include certain information. The functionality may also belong to certain information.

In the present disclosure, "be associated with", "include", "belong to", and "correspond to" may be used interchangeably.

The certain information may be at least one of the following described below. The certain information and the functionality related information may be interchangeably used with each other.

The certain information may be information regarding applicable conditions/configurations.

The certain information may be, for example, an applicable NW configuration. For example, the applicable parameter related to the NW configuration may be at least one of the parameter of the system information and the parameter of the assistance information.

The certain information may be, for example, an applicable UE configuration. For example, the applicable parameter related to the UE configuration may be an upper layer (for example, RRC) parameter.

The certain information may be, for example, information regarding an applicable scenario. The information may be, for example, information indicating at least one of NLOS/LOS, UE distribution, SINR, RSRP, bandwidth, frequency, indoor/outdoor, and a deployment scenario (for example, at least one of Urban Macro (UMa), Urban Micro (Umi), and Indoor Hotspot (InH)).

The certain information may be, for example, information regarding an applicable arrangement. The information may be, for example, information indicating at least one of applicable antenna configuration (for example, at least one of the number of horizontal/vertical antenna elements/panels, the number of ports, antenna spacing, antenna location, panel location, and transceiver unit (TxRU) mapping), the beam configuration (for example, at least one of the beam width, the number of beams, and the beam direction), and TRP information (for example, at least one of a TRP altitude and a relative location for multiple TRPs).

The certain information may be, for example, information regarding an applicable site. The information may be, for example, information indicating at least one of an area ID, an NR cell global ID, an NR physical cell ID, a certain frequency (for example, ARFCN), and an ECGI.

The certain information may be, for example, information regarding an applicable paired model. The paired models may be, for example, two (two or more) NW-side models (combination of models). The information may be, for example, information indicating a paired model for CSI compression.

The certain information may be, for example, information regarding an applicable time. The information may be, for example, information indicating an applicable period/interval/duration. The duration may be indicated by using, for example, a certain time unit (for example, slot/symbol/subslot/millisecond/second).

Applicable conditions/configurations may be predefined in the specification or may be determined/identified using a certain ID/token. For example, applicable configurations/scenarios/conditions may be defined as certain parameters (for example, test parameters) or may be represented using certain IDs/tokens.

Performance (for example, prediction accuracy, location error) of the functionality may be assumed to be better (for example, high) than a certain threshold in the applicable conditions/configurations. The certain condition/configuration may be, for example, a condition/configuration in a certain test.

The threshold/performance requirements may be predefined in a specification or may be determined/identified using a certain ID/token.

If the threshold/performance requirements are based on a certain ID/token, each vendor/operator may define and utilize the desired threshold/performance.

### (Analysis)

As an approach for securing consistency of the additional conditions between the UE and the NW described above, monitoring of the additional conditions has been studied.

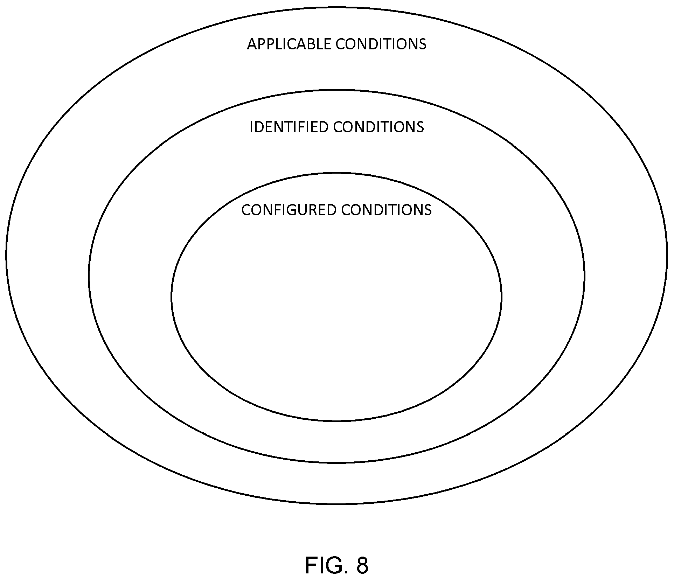

Figs. 7 and 8 are conceptual diagrams illustrating the correspondence relationship between the conditions and the additional conditions of the present disclosure. As illustrated in Fig 7, in the present disclosure, a condition may mean a set of parameters that may be reported in a UE capability report to support a certain model/functionality.

In addition, the additional conditions (UE side/NW side) may mean a parameter set that can be aligned between the UE and the NW through other potential methods.

In addition, a correspondence relationship of application conditions as illustrated in Fig. 8 may be considered for a certain model/function. For example, applicable conditions may mean conditions that may be supported for a certain model/functionality. The identified conditions may also refer to a subset of applicable conditions utilized for identification. Further, the set conditions may refer to a subset of the identified conditions utilized for configuration.

As illustrated in Fig. 8, the applicable conditions may include identified conditions, and identified conditions may include set conditions. That is, the magnitude relationship of these three concepts may be expressed by applicable conditions > identified conditions > set conditions.

On the other hand, there is a need to clarify a performance monitoring method and related procedure for the UE/NW side model/functionality in consideration of the additional conditions. Specific examples thereof include the following contents:
· information transmission for performance monitoring in consideration of additional conditions;
· what comparison rules/criteria can be considered for the consistency of the additional conditions; and
· monitoring procedure when additional conditions are considered.

As described above, there is still room for study on monitoring in consideration of additional conditions. If these studies are not sufficient, suitable overhead reduction/channel estimation/resource utilization cannot be performed, and improvement in communication throughput/communication quality may be suppressed.

Therefore, the present inventors have conceived a method for solving these problems.

### (Various Interpretations and so on)

Hereinafter, embodiments according to the present disclosure will be described in detail with reference to the drawings. The radio communication method according to each of the embodiments may be applied independently, or may be applied in combination with others.

In the present disclosure, "A/B" and "at least one of A or B" may be interchangeable with each other. Furthermore, in the present disclosure, "A/B/C" may mean "at least one of A, B, and C".

In the present disclosure, notification, activate, deactivate, instruct (or indicate), select, configure, update, determine, and so on may be interchangeable with each other. In the present disclosure, support, control, can control, operate, can operate, and so on may be interchangeable with each other.

In the present disclosure, radio resource control (RRC), an RRC parameter, an RRC message, a higher layer parameter, a field, an information element (IE), a configuration, and so on may be interchangeable with each other. In the present disclosure, a Medium Access Control control element (MAC control element (CE)), an update command, an activation/deactivation command, and so on may be interchangeable with each other.

In the present disclosure, the higher layer signaling may be, for example, any one of Radio Resource Control (RRC) signaling, Medium Access Control (MAC) signaling, broadcast information, other messages (a message from the core network, such as, a positioning protocol (for example, NR Positioning Protocol A (NRPPa)/LTE Positioning Protocol (LPP)) message), or the like, or a combination thereof.

In the present disclosure, the MAC signaling may use, for example, the MAC control element (MAC CE), a MAC protocol data unit (PDU), or the like. The broadcast information may be, for example, a master information block (MIB), a system information block (SIB), remaining minimum system information (RMSI), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and so on may be interchangeable with each other. In the present disclosure, a sequence, a list, a set, a group, a cohort, a cluster, a subset, and so on may be interchangeable with each other.

In the present disclosure, a panel, a UE panel, a panel group, a beam, a beam group, a precoder, an Uplink (UL) transmission entity, a transmission and reception point (Transmission/Reception Point (TRP)), a base station, Spatial Relation Information (SRI), a spatial relation, an SRS Resource Indicator (SRI), a COntrol REsource Set (CORESET), a Physical Downlink Shared Channel (PDSCH), a Codeword (CW), a Transport Block (TB), a Reference Signal (RS), an antenna port (for example, a DeModulation Reference Signal (DMRS) port), an antenna port group (for example, a DMRS port group), a group (for example, a spatial relation group, a Code Division Multiplexing (CDM) group, a reference signal group, a CORESET group, a Physical Uplink Control Channel (PUCCH) group, or a PUCCH resource group), a resource (for example, a reference signal resource and an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, a Quasi-Co-Location (QCL), QCL assumption, and so on may be interchangeable with each other.

In the present disclosure, the CSI-RS, the non-zero power (NZP) CSI-RS, the zero power (ZP) CSI-RS, and the CSI interference measurement (CSI-IM) may be interchangeably used with each other. Further, the CSI-RS may include other reference signals.

In the present disclosure, measured/reported RS may mean measured/reported RS for CSI reporting.

In the present disclosure, timing, time and date, time, slot, subslot, symbol, subframe, and so on may be interchangeably used with each other.

In the present disclosure, directions, axes, dimensions, domains, polarizations, polarization components, and so on may be interchangeably used with each other.

In the present disclosure, estimation, prediction, and inference may be interchangeably used with each other. Furthermore, in the present disclosure, "estimate, predict, and infer" may be interchangeably used with each other.

In the present disclosure, an autoencoder, an encoder, a decoder, and so on may be interchangeably used with at least one of a model, an ML model, a neural network model, an AI model, an AI algorithm, and so on. Furthermore, the autoencoder may be replaced with any autoencoder such as a stacked autoencoder or a convolutional autoencoder. The encoder/decoder of the present disclosure may adopt a model such as Residual Network (ResNet), DenseNet, or RefineNet.

In the present disclosure, a bit, a bit string, a bit sequence, a sequence, a value, information, a value obtained from a bit, information obtained from a bit, and so on may be interchangeably used with each other.

In the present disclosure, a layer (for the encoder) may be interchangeably used with a layer (input layer, intermediate layer, and so on) utilized in the AI model. The layer of the present disclosure may correspond to at least one of the input layer, the intermediate layer, an output layer, a batch normalization layer, a convolution layer, an activation layer, a dense layer, a normalization layer, a pooling layer, an attention layer, a dropout layer, a fully connected layer, and so on.

In the present disclosure, the RSRP may be interchangeably used with an optional parameter (for example, RSRQ, SINR, CSI) related to reception power/reception quality or the like.

In the present disclosure, the RS may be, for example, a CSI-RS, an SS/PBCH block (SS block (SSB)), or the like. Further, the RS index may be a CSI-RS resource indicator (CSI-RS Resource Indicator (CRI)), an SS/PBCH block resource indicator (SS/PBCH Block Indicator (SSBRI)), or the like.

In the present disclosure, the channel measurement/estimation may be performed using, for example, at least one of a Channel State Information Reference Signal (CSI-RS), a Synchronization Signal (SS), a Synchronization Signal/Physical Broadcast Channel (SS/PBCH) block, a DeModulation Reference Signal (DMRS), a Sounding Reference Signal (SRS), and so on.

In the present disclosure, the reception beam assumption, the number of reception beams, the index of the reception beam, the reception beam selection, the configuration of the reception beam, and the reception beam indication may be interchangeably used with each other. In the present disclosure, the reception beam, the transmission beam, the DL reception beam, the DL transmission beam, a pair of the transmission beam and the reception beam may be interchangeably used with each other. In the present disclosure, a transmit/reception beam may be interchangeably used with the transmit/reception beam for beam prediction and the transmit/reception beam for CSI measurement/report for beam prediction.

In the present disclosure, the function (functionality) may mean the use of the model, or may mean the physical meaning of the input/output of the model. Multiple models may have the same function. Monitoring (checking performance)/activation/deactivation/switching/fallback/upd ate may be indicated (controlled) based on the function (for example, for each function).

The model ID may mean an identifier of a model (or a set of models). Multiple models may be assigned the same model ID in an actual deployment. In this case, these models are actually different models (for example, the number of layers is different), but may be treated as the same model.

In the present disclosure, the model ID may be interchangeably used with a meta-information (or a set of meta-information) ID. The meta-information (or meta-information ID) may be associated with information related to the applicability of the model/functionality, the environment, the configuration of the UE/gNB, and so on.

In the present disclosure, the functionality may be simply read as "function".

In the present disclosure, the functionality, the function, the functionality ID, the model, and the model ID may be interchangeably used with each other.

In the present disclosure, the applicable update, updating the applicable model/functionality, updating the applicability of the model/functionality, and the applicable update may be interchanged.

In the present disclosure, the update, the report, and the transmission may be interchangeably used with each other.

In the present disclosure, the meta-information, the assistance information, the sensing information, the KPI, the performance KPI, the UE status, and the status may be interchangeably used with each other.

In the present disclosure, the monitor (monitoring) and the evaluation may be interchangeably used with each other. In addition, the monitoring and evaluating validity/applicability may be interchangeably used with each other.

In the present disclosure, the decision, the determination, the application of the certain operation, and the decision making may be interchangeably used with each other.

In the present disclosure, the entity, the certain entity, the UE, the NW, the gNB, and the LMF may be interchangeably used with each other.

In the present disclosure, the NW, the LMF, the gNB, and the BS may be interchangeably used with each other.

In the present disclosure, the performance indicator and the monitoring indicator may be interchangeably used with each other.

In the following embodiments, the related entity is UE/gNB/LMF to describe the AI model for communication between UE/gNB/LMF, but an application of each embodiment of the present disclosure is not limited thereto. For example, for communication (for example, communication between UE and UE) between different entities, the UE/gNB/LMF of the following embodiment may be interchangeably used with the first UE, the second UE, and the third ···. In other words, any UE/gNB/LMF of the present disclosure may be interchangeably used with any UE/gNB/LMF. In addition, NW/BS/gNB/LMF may be interchangeably used with each other.

### (Radio Communication Method)

Embodiments of the present disclosure can be roughly classified as follows:
· First Embodiment: information for performance monitoring in consideration of additional conditions; and
· Second Embodiment: UE/NW operation after performance monitoring in consideration of additional conditions.

Hereinafter, each embodiment will be described based on these.

In the present disclosure, each embodiment/each option may be applied alone, or may be applied in combination.

In the present disclosure, the model/functionality to be monitored is not particularly limited, and may be any model/functionality (for example, active/inactive/identified/unidentified/configured/applicab le model/functionality).

In the present disclosure, the performance monitoring in consideration of the additional conditions and the monitoring of the additional conditions may be interchangeably used with each other.

In the present disclosure, applicable/configured/identified conditions for a model/functionality may be reported by the UE and may be indicated by the NW with/separately from additional conditions.

In the present disclosure, in the present disclosure, the conditions/additional conditions may mean a parameter set reported through the UE capability to support a certain model/functionality.

The following embodiments illustrate performance monitoring for the AI-based positioning, but are not limited thereto and are also applicable to other scenarios (for example, CSI compression, CSI feedback).

In the following embodiment, a location management function (LMF) is exemplified as the NW, and an operation between the UE and the LMF will be mainly described, but communication between the UE and the LMF may be realized via gNB. Alternatively, in the following embodiment, the NW may be interchangeably used with the gNB.

### <First Embodiment>

A first embodiment relates to information for performance monitoring in consideration of the additional conditions.

### <<Aspect 1-1>>

In Aspect 1-1, a specific example of information for performance monitoring in consideration of additional conditions will be described.

The UE/NW may apply/utilize/consider/assume at least one piece of information of the following Alt1 to Alt4 for performance monitoring considering the additional conditions. That is, the information for monitoring the additional conditions may include at least one of the following Alt1 to Alt4.

Note that, in the following description, the information for monitoring the additional conditions can be classified into type X/Y/Z according to the type of information. The type X/Y/Z may represent an invariable parameter (constant, that is, a value that does not change once set) or a variable parameter.

More specifically, a type X may represent a fixed (invariant) parameter (NW-side parameter) related to TRP/cell arrangement, and a type Y/Z may represent a fluid (variable) parameter (UE-side parameter) related to the UE surrounding environment.

Note that these classifications are merely examples, and the classification of the corresponding information does not necessarily limit the characteristics thereof. That is, the types described below merely exemplify the types of information, and do not mean that handling differs depending on the types of information. Alternatively, the following classifications may not necessarily be applied.

(Alt1): Deployment/scenario related information
<Type X1>
   · TRP/cell information:
      · Number of TRPs/set of TRPs;
      · TRP index; and
      · Frequency of TRP/cell.
<Type X1'>
   · Additional TRP information:
      · Antenna height of TRP (the unit is meters or the like); and
      · Antenna (beam) directivity of TRPs (radiation pattern, directivity coefficient, beam width (degree), side lobe level (dB), and so on).
<Type X2>
   · Dataset size/sample density (for example, number of samples per area (#samples/m2)).
<Type Y1>
   · Information regarding an Indoor Factory (InF) scenario (for example, Indoor Factory with Dense clutter and High base station height (InF-DH)).
   · Information regarding a clutter parameter (for example, {40%, 2, 2} and {60%, 6, 2}).
   · Information regarding a UE distribution area (for example, convex hull, whole hall area, and so on).
   · Number of drops.
<Type Z1>
   · Channel condition associated with fading:
      · general multipath effects/conditions (for example, channel impulse response (CIR), delay/delay spread, doppler/doppler spread);
      · LOS/NLOS conditions (%);
      · doppler (Hz/ppm),
      · weather-related conditions (for example, rain attenuation (dB));
      · blockage condition (for example, a blockage/shadowing area);
      · scattering/diffraction (for example, scattering/diffraction loss (dB)); and
      · distance (meters/kilometer) from UE to TRP/cell center.

(Alt2): measurement/estimation related information
<Type X3>
   · Information needed to run the model/functionality (for example, the number of consecutive time domain samples, the number of ports, and so on)
<Type Y2>
   · Network synchronization error
<Type Y3>
   · UE/NW transmission/reception timing error
<Type Y4>
   · SNR mismatch (mismatch)
<Type Y5>
   · Channel estimation error

(Alt3): UE status information
<Type Z2>
   · UE speed/trajectory
<Type Z3>
   · Environment/surrounding/channel/clutter temporal variation (for example, mobility of a clutter object in an environment)
<Type X4>
   · UE internal conditions (for example, restrictions on memory, battery, and other hardware, and so on)

### [Notes]

The above-described type X information only needs to have common recognition between the NW and the UE.

The type Y/Z information needs to have common recognition between the NW and the UE. Variant information that needs to be reacquired as the type Y/Z information may be utilized as a monitoring indicator (metric).

According to this aspect, information necessary for monitoring the additional conditions can be clarified.

### <<Aspect 1-2>>

In Aspect 1-2, additional condition signaling is described.

The UE/NW may transmit and receive (notify or report) the signaling related to the additional conditions by higher layer signaling/physical layer signaling. That is, the UE/NW may be explicitly/implicitly indicated or notify of the additional conditions using certain signaling.

For example, when the UE performs monitoring, the additional conditions may be notified from the NW (LMF) to the UE. Alternatively, when the NW (LMF) performs monitoring, the additional conditions may be notified from the UE to the NW.

The information regarding the additional conditions may be notified/indicated according to an indication by the NW, a request from the UE, or a predefined rule.

The indication/notification of the additional conditions may be according to at least one of Opt1 to Opt2 below.

### (Opt1): implicit indication

The additional conditions may be implicitly indicated using the model ID. For example, in a functionality-based LCM, the model ID may be utilized to indicate a model with corresponding NW-side/UE-side additional conditions.

In this case, the model ID may be globally unique/local-unique/unique in a certain functionality. That is, the model ID may be uniquely associated with a certain functionality. For example, models with the same additional conditions (NW side/UE side) may be assigned the same model ID.

Note that the model ID does not need to indicate a physical model. For example, the model ID may be directly associated with the additional conditions.

As described above, according to the implicit instruction, it is possible to instruct/designate the additional conditions using the existing ID (model ID).

### (Opt2): explicit indication

The additional conditions may be explicitly indicated using the additional condition ID. For example, one or more additional condition IDs may be associated with one model (ID).

The additional condition ID may be globally unique/local-unique/unique in a certain functionality. That is, the additional condition ID may be uniquely associated with a certain functionality.

As described above, according to the explicit instruction, for example, a plurality of additional conditions can be associated with one model ID. Alternatively, one (the same/common) additional condition can be associated with a plurality of model IDs (one additional condition can be shared among a plurality of model IDs).

According to this aspect, the signaling (instruction/notification) of the additional condition can be appropriately controlled.

### <<Aspect 1-3>>

In Aspect 1-3, comparison of an indicator (metric) with respect to additional conditions will be described. The subject that performs the comparison may be a subject (UE/NW) that performs monitoring.

### <Comparison of Additional Conditions>

The UE/NW may control the evaluation/monitoring of the model/functionality based on the additional conditions associated with the model/functionality.

The additional conditions associated with the model/functionality may include at least one of the information described in Aspect 1-1. Such information may be transmitted to the NW to identify the model/functionality when reporting (including in the UE capability) the UE capability.

In addition, the information described in Aspect 1-1 may or may not be transmitted to the NW. The UE may report the information to the NW according to an indication of the NW or according to a predefined rule. The predefined rule may be, for example, reporting of updated information, reporting every certain time (every given period), or the like.

The information described in Aspect 1-1 may or may not be included in the information for identifying the model/functionality. Furthermore, the information may be updated with (according to) time.

The information according to Aspect 1-1 may be compared to the additional conditions of the model/functionality for model training. More specifically, the UE/NW may compare the additional conditions (NW side/UE side) for model inference or the current additional conditions (NW side/UE side) with the applicable/configured/identified conditions of the model/functionality for model training or the additional conditions of the model/functionality for model training.

In this case, the UE/NW may control the comparison according to the criteria indicated in the following Opt1 to Opt2. That is, the UE/NW may perform the comparison by applying at least one of the following Opt1 to Opt2.

Here, the above-described "current" may/may be taken to mean at the time (timing)/in certain duration to evaluate/monitor the additional conditions of the model/functionality.

### (Opt1)

The difference between the values is not larger than the threshold value, or the difference is within a certain range of values in a certain duration of time. If not, the corresponding model/functionality may be considered/determined as not meeting the requirements and the next action (criterion) may be required.

For example, channel conditions associated with fading, such as synchronization errors, timing errors, SNR mismatches, and so on, may be in accordance with these criteria.

For example, the difference (synchronization error) of the synchronization error of the NW may be less than or equal to a given time (nanoseconds or milliseconds)/less than the given time. The difference in scattering/diffraction loss may be less than or equal to a given threshold (dB)/less than the given threshold. Such threshold/value ranges may be predefined by specification or configured/indicated by the NW.

### (Opt2)

The information regarding the current arrangement/scenario/configuration (information according to Aspect 1-1) may be the same as the additional conditions of corresponding model/functionality. If not, the model/functionality may be considered/determined as not meeting the requirements and the next action (criterion) may be required.

For example, information that may significantly affect performance, such as an InF scenario, a clutter parameter, or the like, may follow this criterion. For example, the same InF scenario/clutter parameters may be maintained.

### (Note)

For example, if the additional conditions are not included in the applicable conditions in the UE capability report, an indication of whether the additional conditions satisfied/aligned with the applicable value may be reported (received) to the entity (UE/NW) that performs the performance monitoring decision.

This allows the UE/NW to compare the corresponding additional conditions with, for example, applicable additional conditions or additional conditions for training by the monitoring entity to be implemented.

### <Indicator for Monitoring>

The monitoring of the additional conditions is, for example, a procedure of checking/evaluating consistency of one or more additional conditions. The monitoring of the additional conditions may be referred to as performance monitoring of the stage 2. In a case where the monitoring of the additional conditions is executed, one or more indicators may be considered.

For example, the maximum number of indicators available in monitoring the additional conditions may be configured/indicated from the NW (for example, LMF) by higher layer signaling/physical layer signaling, or may be predefined.

In addition, the number of indicators utilized in monitoring of the additional conditions and selection of the additional conditions to be monitored (which additional condition is to be monitored) may be configured/instructed from the NW (for example, LMF) by higher layer signaling/physical layer signaling, or may be predefined.

### <Data Collection>

When monitoring of the additional conditions is executed, the following at least one piece of information may be included for data collection for monitoring the additional conditions:
· a type of information requested (for example, one or more additional conditions in Aspect 1-1); For example, the requested pair conditions may be additional conditions utilized for model inference/model training or applicable additional conditions that may be reported in the UE capability report.
· measurement duration;
· the number of measurement samples requested (required);
· a start/end time of the measurement; and
· a measurement period.

### <Report of Comparison Result>

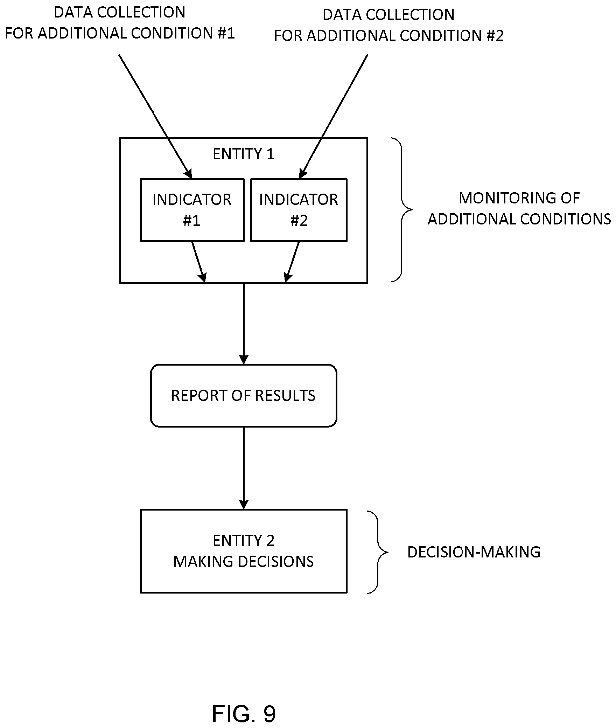

The UE/NW may report the comparison result to a certain entity (for example, an entity that calculates an indicator). For example, as illustrated in Fig. 9, the entity 1 may report a comparison result to the entity 2.

Here, the entity 1 may be an entity that calculates an indicator. The entity 2 may be an entity that makes a decision (determination) based on a comparison result.

In the present disclosure, the making a decision may mean receiving monitoring results to make a decision/determine actions that a certain entity applies to the model/functionality.

In the present disclosure, the entity 1/entity 2 may be the same entity (UE/NW) as each other, or may be different entities (UE/NW).

When multiple indicators are applied, the comparison results may be reported together, or may be reported separately for each indicator.

According to this aspect, the UE/NW can appropriately report the comparison result.

### (Specific Example)

Fig. 9 is a diagram illustrating an example of monitoring according to the first embodiment. As illustrated in Fig. 9, the data collected for the additional condition #1 and the data collected for the additional condition #2 are transmitted to the entity 1. The entity 1 may perform monitoring based on the data. The monitoring may be comparing the additional condition #1 with the indicator #1 and comparing the additional condition #2 with the indicator #2. The entity 1 may notify the entity 2 of the monitoring result. Then, the entity 2 may make a decision based on the monitoring result.

According to this embodiment, the UE/NW can properly perform monitoring (considering the additional conditions) of the additional conditions.

### <Second Embodiment>

A second embodiment relates to a UE/NW operation after performance monitoring considering additional conditions.

### <<Aspect 2-1>>

In Aspect 2-1, an operation after performance monitoring will be described. An entity in the operation of the present aspect may be an entity (UE/NW) that performs monitoring.

If the performance monitoring results are not satisfied (for example, if the performance of the corresponding model/functionality does not meet the given threshold), at least one of the following actions may be applied:
· model/functionality update/switch/activation/deactivation/fallback; and
· monitoring of additional conditions (that is, procedure for checking/evaluating consistency of additional conditions).

In the present disclosure, the "case where the result of the performance monitoring is not satisfied" may be interchangeably used with the "case where the rule/criteria of the performance monitoring is not satisfied" or the "case where the requirement/threshold of the performance indicator is not satisfied".

### <Case of Monitoring Additional Conditions>

When the determination of monitoring of the additional conditions (monitoring is triggered), at least one action of the following Opt1 to Opt2 may be applied:

### (Opt1)

The entity that has determined/triggered the monitoring of the additional conditions directly transmits a request for data collection of the additional conditions to other entities. The collected additional conditions are also indicated/notified/transmitted to the entity performing the monitoring.

For example, if the entity that determines/triggers monitoring of the additional conditions is an NW (LMF), and an entity that performs monitoring is a UE, after determination/triggering of monitoring, the NW starts to collect corresponding data. Then, the NW transmits (instructs/transfers) the collected data (additional conditions) to the UE for monitoring.

### (Opt2)

The entity that has determined/triggered the monitoring of the additional conditions may transmit the fact (an instruction regarding the determination/triggering of the monitoring of the additional conditions) to another entity (entity that performs monitoring). The instruction may include at least one piece of the following information:
· performance of monitoring of the additional conditions, or instruction on the additional conditions to be monitored;
· indicator for monitoring additional conditions;
· the number of indicators used (required) to monitor additional conditions; and
· information/assistance information necessary for data collection.

For example, if the entity that determines/triggers monitoring of the additional conditions is an NW (LMF), and an entity that performs monitoring is a UE, the NW transmits (instructs) the UE that the determination/triggering has been performed. The UE starts data collection for monitoring the additional conditions based on the (received) instruction.

### <Specific Example>

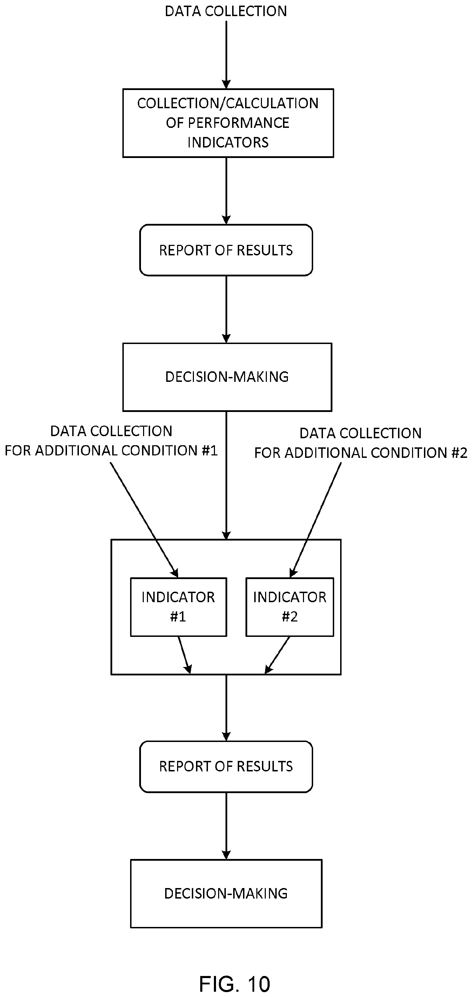

Fig. 10 is a diagram illustrating an example of monitoring according to Aspect 2-1. As illustrated in Fig. 10, the collected data is transmitted to one entity. The entity that has received the data may perform monitoring based on the data. The monitoring may be collecting/calculating performance indicators of the corresponding model/functionality. The monitoring result may be notified from one entity to another entity. Then, another entity may make a decision based on the monitoring result.

The decision making content is transmitted to one entity. The data collected for the additional condition #1 and the data collected for the additional condition #2 are transmitted to one entity. The one entity may perform monitoring based on the data. The monitoring may be comparing the additional condition #1 with the indicator #1 and comparing the additional condition #2 with the indicator #2. The monitoring result may be notified from one entity to another entity. Then, another entity may make a decision based on the monitoring result.

According to this aspect, the UE/NW can appropriately control operation (for example, monitoring of additional conditions) after performance monitoring.

### <<Aspect 2-2>>

In Aspect 2-2, an operation after monitoring the additional conditions will be described. An entity in the operation of the present aspect may be an entity (UE/NW) that performs monitoring.

In the present disclosure, the "case where the monitoring of the additional conditions is satisfied" may be interchangeably used with the "case where the rule/criteria of monitoring of the additional conditions is satisfied" or the "case where the requirement/threshold of the indicator of the additional condition is satisfied".

### <Case in which Monitoring of Additional Conditions is Satisfied>

In this case, the UE/NW may perform performance monitoring.

The entity performing the monitoring may select the performance indicator based on the monitoring of the additional conditions and trigger a collection of corresponding data.

### <Case in which Monitoring of Additional Conditions is Not Satisfied>

In this case, the UE/NW may perform at least one of the following operations:
· a fallback operation;
· model/functionality update/fine-tune in consideration of Type X parameters;
· model/functionality switching (for example, switching to models with different types (Y/Z) of parameters); and
· indication of status for additional conditions to be monitored (for example, a certain condition is well-worked or not worked).

### <Case in which Multiple Indicators are Applied>

In this case, the UE/NW may make a decision/determine (decision making) in consideration of the results for all indicators.

Note that each indicator may be evaluated independently, or all indicators may be evaluated jointly.

For example, in the InF scenario, a timing error and an NW synchronization error are applied as indicators. In this case, the comparison result can be exemplified as follows:
· InF scenario: switched to model A/B/C;
· Timing error: switched to model B/C; and
· NW synchronization error: switched to Model C.

As a result, the model is switched to the model C. That is, the determination content is switching to the model C.

Alternatively, the following comparison results can also be exemplified:
· InF scenario: satisfied;
· Timing error: a model/functionality update/fine-tune is performed in consideration of the timing error; and
· NW synchronization error: a model/functionality update/fine-tune is performed in consideration of the NW synchronization error.

As a result, the model/functionality update/fine-tune is performed in consideration of timing errors and NW synchronization errors. That is, the determination content is to perform the model/functionality update/fine-tune in consideration of the timing error and the NW synchronization error.

### <Specific Example>

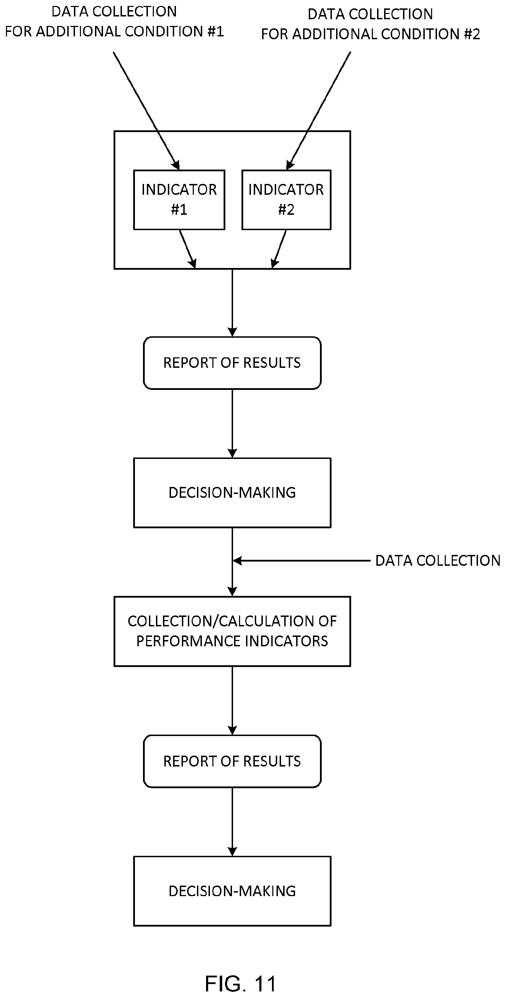

Fig. 11 is a diagram illustrating an example of monitoring according to Aspect 2-2. As illustrated in Fig. 11, the data collected for the additional condition #1 and the data collected for the additional condition #2 are transmitted to one entity. The one entity may perform monitoring based on the data. The monitoring may be comparing the additional condition #1 with the indicator #1 and comparing the additional condition #2 with the indicator #2. The monitoring result may be notified from one entity to another entity. Then, another entity may make a decision based on the monitoring result.

The decision making content is transmitted to one entity. In addition, the collected data is transmitted to one entity. The entity that has received the data may perform monitoring based on the data. The monitoring may be collecting/calculating performance indicators of the corresponding model/functionality. The monitoring result may be notified from one entity to another entity. Then, another entity may make a decision based on the monitoring result.

According to this aspect, the UE/NW can appropriately control the operation after monitoring the additional conditions. Specifically, the UE/NW can perform decision making more efficiently and directly. For example, in a case where the monitoring of the additional conditions is not satisfied, only the information regarding the additional conditions may be notified. Therefore, data collection for performance monitoring becomes unnecessary, and unnecessary communication overhead can be suppressed. As a result, low cost communication can be realized.

### <<Aspect 2-3>>

In Aspect 2-3, an operation (combination of Aspect 2-1 and Aspect 2-2) after performance monitoring in consideration of the additional conditions will be described. An entity in the operation of the present aspect may be an entity (UE/NW) that performs monitoring.

The performance indicator (Aspect 2-1) and the additional conditions (Aspect 2-2) described above may be collected and monitored jointly.

The data collection for performance monitoring and data collection for additional conditions may be triggered together or separately. (Conditions of) these triggers may be configured/indicated by higher layer signaling/physical layer signaling, or may be determined based on predefined rules.

The comparison result of the performance indicators and the comparison result of the indicator of the additional conditions may be reported together, or may be reported separately.

The decision making (decision/determination) may be considered jointly (together) with performance monitoring and monitoring of the additional conditions. In this case, at least one of the following Alt1 to Alt2 may be applied depending on different cases.

### (Alt1)

The determination/triggering of the monitoring of additional conditions in Aspect 2-2 may be applied. That is, the determination/triggering of the monitoring of the additional conditions may be controlled based on the determination/triggering of performance monitoring.

For example, when execution of model switching is determined in performance monitoring (when the determination content is model switching), the determination content for monitoring the additional conditions may be switching to the model A/B/C. Alternatively, when execution of model update is determined in performance monitoring (when the determination content is model update), the determination content for monitoring the additional conditions may be an update to a model in consideration of the type X/Y/Z.

Note that Alt1 illustrates a case where the performance monitoring is not satisfied and the monitoring of the additional conditions is not satisfied.

### (Alt2)

A status of the monitored additional conditions may be indicated to a certain entity. The certain entity may be an entity to which the model is deployed.

The status may indicate whether or not it is sufficiently functioning, for example, how many parameters (deviations) of certain types (X/Y/Z) are. In a case where a certain parameter functions sufficiently, it may be instructed to exclude (may be) the certain parameter from the update target.

Note that Alt2 may be applied in the following cases.
· If the performance monitoring is satisfied and monitoring of the additional conditions is satisfied. In this case, Aspect 2-2 may not be applied.
· If the performance monitoring is not satisfied and monitoring of the additional conditions is satisfied. In this case, a determination (content) for performance monitoring is indicated to a certain entity (for example, UE). In addition, the status of the monitored additional conditions is additionally indicated to the entity.

When the performance monitoring is satisfied and the monitoring of the additional conditions is also satisfied, the present aspect may not be applied.

### <Specific Example>

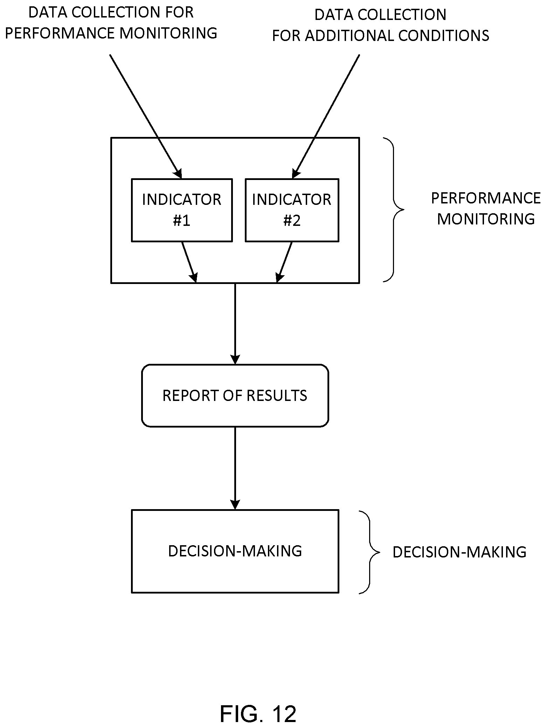

Fig. 12 is a diagram illustrating an example of monitoring according to Aspect 2-3. As illustrated in Fig. 12, the data collected for the performance monitoring and the data collected for the additional conditions are transmitted to one entity. The one entity may perform monitoring based on the data. The monitoring may be comparing the model/functionality with the indicator #1 and comparing the additional condition with the indicator #2. The monitoring result may be notified from one entity to another entity. Then, another entity may make a decision based on the monitoring result (the performance monitoring result and the monitoring result of the additional conditions).

According to this aspect, the operation after performance monitoring can be appropriately controlled in consideration of (in combination with) Aspect 2-1 and Aspect 2-2.

According to this embodiment, the UE/NW can appropriately perform the operation after the monitoring in consideration of the additional conditions.

### <Supplement>

### [Supplement 1: AI model information]

In the present disclosure, the AI model information may mean information including at least one of the following:
· AI model input/output information;
· pre-processing/post-processing information for AI model input/output;
· information of the parameter of the AI model;
· training information for the AI model;
· inference information for the AI model; and
· performance information regarding the AI model.

Here, the input/output information of the AI model may include information regarding at least one of the following:
· contents of input/output data (for example, RSRP, SINR, amplitude/phase information in a channel matrix (or precoding matrix), information regarding an angle of arrival (AoA), information regarding an angle of departure (AoD), and location information);
· auxiliary information of data (which may be referred to as meta-information);
· the type of input/output data (for example, an immutable value or a floating-point number);
· the bit width (for example, 64 bits for each input value) of the input/output data;
· quantization interval (quantization step size) of input/output data (for example, 1 dBm for L1-RSRP); and
· possible ranges of input/output data (for example, [0, 1]).

Note that, in the present disclosure, the information regarding the AoA may include information regarding at least one of azimuth angles of arrival and zenith angles of arrival (ZoA). Furthermore, the information regarding the AoD may include, for example, information regarding at least one of the azimuth angles of departure and the zenith angles of departure (ZoD).

In the present disclosure, the location information may be location information related to the UE/NW. The location information may include at least one of information (for example, latitude, longitude, and altitude) obtained by using a positioning system (for example, a satellite positioning system (Global Navigation Satellite System (GNSS), Global Positioning System (GPS), and so on)), information (for example, an Identifier (ID) of the BS/cell, a distance between the BS and the UE, a direction/angle of the BS (UE) viewed from the UE (BS), coordinates (for example, coordinates of X/Y/Z axes) of the BS (UE) viewed from the UE (BS), and so on) of a BS adjacent to (or serving) the UE, a certain address (for example, an Internet Protocol (IP) address) of the UE, and so on. The location information of the UE is not limited to information based on the location of the BS, and may be information based on a certain point.

The location information may include information regarding its implementation (for example, location/position/orientation of antenna, the location/orientation of antenna panel, the number of antennas, the number of antenna panels, and so on).

The location information may include mobility information. The mobility information may include information indicating a mobility type, information indicating at least one of a UE movement speed, a UE acceleration, a UE movement direction, and so on.

Here, the mobility type may correspond to at least one of fixed location UE, movable/moving UE, no mobility UE, low mobility UE, middle mobility UE, high mobility UE, cell-edge UE, not-cell-edge UE, and so on.

In the present disclosure, the environment information (for data) may be information regarding an environment in which data is acquired/utilized, and may correspond to, for example, frequency information (band ID or the like), environment type information (information indicating at least one of indoor, outdoor, urban macro (UMa), urban micro (Umi), and so on), information indicating Line Of Site (LOS)/Non-Line Of Site (NLOS), and so on.

Here, the LOS may mean that the UE and the BS are in an environment where they can see each other (or there is no shielding), and the NLOS may mean that the UE and the BS are not in an environment where they can see each other (or there is a shielding). The information indicating LOS/NLOS may indicate a soft value (for example, the probability of LOS/NLOS) or a hard value (for example, any of LOS/NLOS).

In the present disclosure, the meta-information may mean, for example, information regarding input/output information suitable for the AI model, information regarding acquired/acquirable data, and so on. Specifically, the meta-information may include information regarding a beam (for example, the pointing angle of each beam, the 3dB beam width, the shape of the pointing beam, the number of beams) of RS (for example, CSI-RS/SRS/SSB, and so on), antenna layout information of gNB/UE, frequency information, environment information, meta-information ID, and so on. Note that the meta-information may be used as an input/output of the AI model.

The information of pre-processing/post-processing for input/output of the AI model may include information on at least one of:
· whether to apply normalization (for example, Z-score normalization (standardization), minimum-maximum (min-max) normalization);
· parameters for normalization (for example, mean/variance for Z-score normalization, and minimum/maximum for minimum-maximum normalization);
· whether to apply a certain numeric conversion method (for example, one hot encoding, label encoding, or the like); and
· a selection rule of whether or not to be used as training data.

For example, as preprocessing on the input information x, Z-score normalization (x_{new} = (x-µ)/σ, where µ is an average of x, and σ is a standard deviation) is performed to obtain normalized input information x_{new}, which may be input to the AI model, and the output yₒᵤₜ from the AI model may be subjected to post-processing to obtain the final output y.

The information of the parameter of the AI model may include information on at least one of:
· weight (for example, the neuron's coefficient (coupling coefficient)) information in the AI model;
· a structure of the AI model;
· the type of AI model as a model component (for example, Residual Network (ResNet), DenseNet, RefineNet, Transformer model, CRBlock, Recurrent Neural Network (RNN), Long Short-Term Memory (LSTM), and Gated Recurrent Unit (GRU)); and
· function of the AI model as a model component (for example, a decoder and an encoder).

Note that the weight information in the AI model may include information on at least one of:
· bit width (size) of the weight information;
· quantization interval of the weight information;
· granularity of weight information;
· a possible range of the weight information;
· a parameter of the weight in the AI model;
· information of the difference from the AI model before update (in a case of updating); and
· a weight initialization method (for example, zero initialization, random initialization (based on normal distribution/uniform distribution/truncated normal distribution), Xavier initialization (for sigmoid function), and He initialization (for rectified linear units (ReLU))).

In addition, the structure of the AI model may include information on at least one of the following:
· the number of layers;
· the type of layer (for example, a convolution layer, an activation layer, a dense layer, a normalization layer, a pooling layer, and an attention layer);
· layer information;
· time-sequence specific parameters (for example, bidirectional and time step); and
· parameters for training (for example, the type of feature (L2 regularization, dropout function, and so on) or where to place this feature (for example, after which layer)).

The layer information may include information on at least one of the following:
· the number of neurons in each layer;
· Kernel size;
· stride for pooling layer/convolution layer;
· pooling methods (MaxPooling, AveragePooling, and so on);
· information of a residual block;
· the number of heads;
· normalization methods (Batch normalization, instance normalization, layer normalization, and so on); and
· activation function (Sigmoid, tanh function, ReLU, Leaky ReLU information, Maxout, Softmax).

A certain AI model may be included as a component of another AI model. For example, a certain AI model may be an AI model in which processing proceeds in the order of ResNet which is the model component #1, a transformer model which is the model component #2, a dense layer, and a normalization layer.

The training information for the AI model may include information on at least one of:
· information for the optimization algorithm (for example, the type of optimization (Stochastic Gradient Descent (SGD)), AdaGrad, Adam, and so on) and parameters of the optimization (learning rate, momentum information, and so on);
· loss function information (for example, information (Mean Absolute Error (MAE), Mean Square Error (MSE), cross-entropy loss, NLLLoss, Kullback-Leibler (KL) divergence, and so on) on an indicator (metrics) of a loss function);
· parameters to be frozen for training (for example, layers and weights);
· parameters to be updated (for example, layers and weights);
· parameters (for example, layers and weights) to be initial parameters for training (to be used as initial parameters); and
· a method of training/updating an AI model (for example, the number of (recommended) epochs, batch size, the number of data used for training).

The inference information for the AI model may include information related to branch pruning of a decision tree, parameter quantization, a function of the AI model, and so on. Here, the function of the AI model may correspond to at least one of, for example, time domain beam prediction, spatial domain beam prediction, an autoencoder for CSI feedback, an autoencoder for beam management, and so on.

The autoencoder for CSI feedback may be used as follows:
· the UE inputs the CSI/channel matrix/precoding matrix into the AI model of the encoder, and transmits the encoded bits output as CSI feedback (CSI report); and
· the BS reconstructs the CSI/channel matrix/precoding matrix that is input and output the received encoded bits into the AI model of the decoder.

In spatial domain beam prediction, the UE/BS may input measurement results (beam quality, for example, RSRP) based on a sparse (or wide) beam into an AI model and output a dense (or narrow) beam quality.

For time-domain beam prediction, the UE/BS may input time sequence (past, present, and so on) measurement results (beam quality, for example, RSRP) to output the beam quality in future.

The performance information related to the AI model may include information related to an expected value of a loss function defined for the AI model.

The AI model information in the present disclosure may include information regarding an application range (applicable range) of the AI model. The application range may be indicated by a physical cell ID, a serving cell index, or the like. The information regarding the application range may be included in the above-described environment information.

The AI model information regarding the certain AI model may be determined in advance in the standard, or may be notified from a network (Network (NW)) to the UE. The AI model defined in the standard may be referred to as a reference AI model. The AI model information related to the reference AI model may be referred to as reference AI model information.

Note that the AI model information in the present disclosure may include an index (for example, it may be referred to as an AI model index, an AI model ID, a model ID, or the like) for specifying the AI model. The AI model information in the present disclosure may include an AI model index in addition to/instead of the above-described input/output information of the AI model and so on. The association between the AI model index and the AI model information (for example, information of input/output of the AI model) may be determined in advance in the standard, or may be notified from the NW to the UE.

The AI model information in the present disclosure may be associated with the AI model, and may be referred to as AI model related information (relevant information), simply related information, or the like. The information for specifying the AI model may not be explicitly included in the AI model related information. The AI model related information may be, for example, information including only meta-information.

In the present disclosure, the model ID may be replaced with an ID (model set ID) corresponding to a set of AI models. In addition, the present disclosure, the model ID may be interchangeably used with a meta-information ID. The meta-information (or meta-information ID) may be associated with the information (beam configuration) related to the beam as described above. For example, the meta-information (or meta-information ID) may be used by the UE to select the AI model in consideration of which beam the BS is using, or may be used to notify which beam the BS should use to apply the AI model deployed by the UE. In the present disclosure, the meta-information ID may be replaced with an ID (meta-information set ID) corresponding to a set of meta-information.

### [Supplement 2: Notification of Information to UE]

Notification of any information to the UE (from the NW) (in other words, the reception of any information from the BS in the UE) in the above-described embodiments may be performed using physical layer signaling (for example, DCI), higher layer signaling (for example, RRC signaling, a MAC CE), a certain signal/channel (for example, a PDCCH, a PDSCH, or a reference signal), or a combination thereof.

When the notification is performed by a MAC CE, the MAC CE may be identified by including, in a MAC subheader, a new logical channel ID (LCID) not defined in existing standards.

When the notification is performed using DCI, the notification may be performed by a certain field of the DCI, a radio network temporary identifier (RNTI) used for scrambling of cyclic redundancy check (CRC) bits added to the DCI, a format of the DCI, or the like.

In addition, the notification of any information to the UE in the above-described embodiments may be performed periodically, semi-persistently, or aperiodically.

### [Supplement 3: Notification of Information from UE]

Notification of any information from the UE (to the NW) (in other words, transmission/report of any information to the BS by the UE) in the above-described embodiments may be performed using physical layer signaling (for example, UCI), higher layer signaling (for example, RRC signaling, a MAC CE), a certain signal/channel (for example, a PUCCH, a PUSCH, or a reference signal), or a combination thereof.

When the notification is performed by a MAC CE, the MAC CE may be identified by including, in a MAC subheader, a new LCID not defined in existing standards.

When the notification is performed by a UCI, the notification may be transmitted using a PUCCH or PUSCH.

In addition, the notification of any information from the UE in the above-described embodiments may be performed periodically, semi-persistently, or aperiodically.

### [Supplement 4]

In the present disclosure, the functionality may mean a set of parameters (for example, a set of parameters for CSI prediction/beam prediction/CSI compression) that may be supported based on the conditions indicated by the UE capability.

The UE may report parameter values associated with the functionality/model as a condition to the NW via higher layer signaling (for example, RRC, MAC CE)/physical layer signaling (for example, DCI). For example, the UE may utilize UE capability/feature/feature group reporting to report the condition.

The UE may report or instruct the parameter value related to the functionality/model to the NW as additional conditions by using a method other than higher layer signaling/physical layer signaling or signaling through an air interface of the NW (for example, operator's configurations, pre-configured messages, and so on).

The UE may report or instruct information/instructions (for example, a parameter name) regarding the corresponding parameters as information/instructions regarding the additional conditions by utilizing a method (for example, operator's configurations, pre-configured messages, and so on) other than higher layer signaling/physical layer signaling or signaling via an air interface of the NW.

For example, the UE may report the device ID, the vendor ID, or the like as the additional information. In addition, the UE may be notified of a cell ID as an additional condition. In addition, the UE may report or be instructed with information such as a cell ID/UE ID instead of the parameter name.

The method other than the signaling through the air interface of the NW may be a method related to pre-configuration of the UE (for example, configuration by the UE vendor) and operator configuration provided by the NW operator.

### [About Application of Each Embodiment]

At least one of the above-described embodiments may be applied when a certain condition is satisfied. The certain condition may be defined in the standards, or may be notified to the UE/BS using higher layer signaling/physical layer signaling.

At least one of the above-described embodiments may be applied only to a UE that has reported a certain UE capability or supports the certain UE capability as described below (the following is merely an example):
· support for functionality-based LCM;
· support for model-ID-based LCM;
· support for the AI/ML-based positioning;
· support for an AI model for obtaining a UE location;
· support for model inference/model monitoring (performance monitoring);
· support for UE-side monitoring (first monitoring);
· support for NW (LMF/gNB) side monitoring; and
· support for two-step monitoring.

The certain UE capability may indicate that it supports certain processing/operation/control/information for at least one of the above embodiments/options/selections.

In addition, the certain UE capability may be capability applied over all the frequencies (in common irrespective of frequency), may be capability for each frequency (for example, one of a cell, a band, a band combination, a BWP, a component carrier, and so on or a combination thereof), may be capability for each frequency range (for example, Frequency Range 1 (FR1), FR2, FR3, FR4, FR5, FR2-1, and FR2-2), may be capability for each SubCarrier Spacing (SCS), or may be capability for each Feature Set (FS) or Feature Set Per Component-carrier (FSPC).

In addition, the certain UE capability may be capability applied across all the duplex schemes (in common irrespective of duplex scheme) or may be capability for each duplex scheme (for example, time division duplex (TDD) and frequency division duplex (FDD)).

In addition, at least one of the above-described embodiments may be applied when the UE is configured/activated/triggered with certain information related to the above-described embodiment (or to perform the operation of the above-described embodiment) by higher layer signaling/physical layer signaling. For example, the certain information may be information indicating that the LCM based on the model/functionality ID is enabled, any RRC parameter for a certain release (for example, Rel. 18/19), or the like.

The UE may apply, for example, the operation of Rel. 15/16/17 when the UE does not support at least one of the certain UE capabilities or is not configured with the certain information.

### (Supplementary Notes)

Regarding one embodiment (first embodiment) of the present disclosure, the following supplementary notes of the invention will be given.

### [Supplementary Note 1]

A terminal including:
a receiving section that receives information on additional conditions for a certain model or functionality; and
a control section that controls monitoring of the additional conditions based on the information,
wherein the information includes at least one of arrangement of a transmission and reception point (TRP) or scenario related information, measurement or estimation related information, and terminal status information.

### [Supplementary Note 2]

The terminal according to Supplementary Note 1, wherein the control section determines the additional conditions based on an implicit instruction using a model ID included in the information or an explicit instruction using an additional condition ID included in the information.

### [Supplementary Note 3]

The terminal according to Supplementary Note 1 or 2, wherein the control section controls the monitoring by comparing the additional conditions for model training with the additional conditions for model inference.

### [Supplementary Note 4]

The terminal according to any one of Supplementary Notes 1 to 3, wherein the receiving section receives an instruction related to a maximum number of indicators available in monitoring of the additional conditions or selection of the additional conditions to be monitored, and
the control section controls the monitoring based on the instruction.

### (Supplementary Notes)

Regarding one embodiment (second embodiment) of the present disclosure, the following supplementary notes of the invention will be given.

### [Supplementary Note 1]

A terminal including:
a receiving section configured to receive information regarding additional conditions or performance monitoring for a certain model or functionality; and
a control section configured to control monitoring of the additional conditions or performance monitoring based on the information,
wherein the control section determines execution of monitoring of the additional conditions based on a result of the performance monitoring.

### [Supplementary Note 2]

The terminal according to Supplementary Note 1, wherein the control section determines execution of the performance monitoring based on a monitoring result of the additional conditions.

### [Supplementary Note 3]

The terminal according to Supplementary Note 1 or 2, wherein the control section selects a performance indicator for the monitoring and controls triggering of corresponding data in a case where the monitoring of the additional conditions is satisfied, and executes at least one of a fallback operation, update of a model or functionality in consideration of a certain parameter, and indication of a status for the additional conditions to be monitored in a case where the monitoring of the additional conditions is not satisfied.

### [Supplementary Note 4]

The terminal according to any one of Supplementary Notes 1 to 3, wherein the control section controls to report the monitoring result of the additional condition and the performance monitoring result together or separately.

### (Radio Communication System)

Hereinafter, a configuration of a radio communication system according to one embodiment of the present disclosure will be described. In this radio communication system, communication is performed using any one of the radio communication methods according to the embodiments of the present disclosure or a combination thereof.

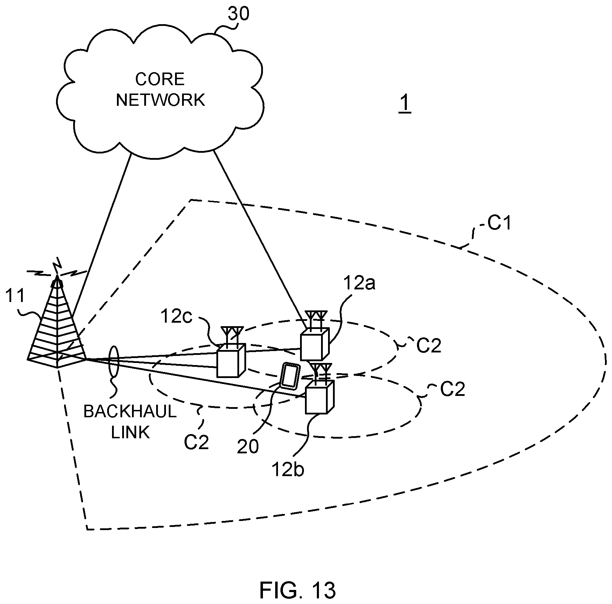

Fig. 13 is a diagram illustrating an example of a schematic configuration of the radio communication system according to one embodiment. A radio communication system 1 (simply referred to as the system 1) may be a system that implements communication using Long Term Evolution (LTE), 5th generation mobile communication system New Radio (5G NR), and so on defined by Third Generation Partnership Project (3GPP).

Further, the radio communication system 1 may support dual connectivity (multi-RAT dual connectivity (MR-DC)) between a plurality of radio access technologies (RATs). The MR-DC may include dual connectivity between LTE (Evolved Universal Terrestrial Radio Access (E-UTRA)) and NR (E-UTRA-NR Dual Connectivity (EN-DC)), dual connectivity between NR and LTE (NR-E-UTRA Dual Connectivity (NE-DC)), and so on.

In the EN-DC, an LTE (E-UTRA) base station (eNB) is a master node (MN), and an NR base station (gNB) is a secondary node (SN). In the NE-DC, an NR base station (gNB) is MN, and an LTE (E-UTRA) base station (eNB) is SN.

The radio communication system 1 may support dual connectivity between a plurality of base stations in the same RAT (for example, dual connectivity in which both the MN and the SN are NR base stations (gNB) (NR-NR dual connectivity (NN-DC))).

The radio communication system 1 may include a base station 11 that forms a macro cell C1 with a relatively wide coverage, and base stations 12 (12a to 12c) that are disposed within the macro cell C1 and that form small cells C2 narrower than the macro cell C1. A user terminal 20 may be positioned in at least one cell. The arrangement, number, and so on of cells and the user terminals 20 are not limited to the aspects illustrated in the drawings. Hereinafter, the base stations 11 and 12 will be collectively referred to as "base station 10" when the base stations 11 and 12 are not distinguished from each other.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a first frequency band (Frequency Range 1 (FR1)) or a second frequency band (Frequency Range 2 (FR2)). The macro cell C1 may be included in the FR1, and the small cell C2 may be included in the FR2. For example, the FR1 may be a frequency band of 6 GHz or less (sub-6 GHz), and the FR2 may be a frequency band higher than 24 GHz (above-24 GHz). It is noted that the frequency bands, definitions, and so on of the FR1 and FR2 are not limited thereto, and, for example, the FR1 may correspond to a frequency band higher than the FR2.

Further, the user terminal 20 may perform communication on each CC using at least one of time division duplex (TDD) and frequency division duplex (FDD).

The plurality of base stations 10 may be connected to each other in a wired manner (for example, an optical fiber in compliance with Common Public Radio Interface (CPRI), an X2 interface, or the like) or in a radio manner (for example, NR communication). For example, when NR communication is utilized as a backhaul between the base stations 11 and 12, the base station 11 corresponding to a higher-level station may be referred to as an Integrated Access Backhaul (IAB) donor, and the base station 12 corresponding to a relay station (relay) may be referred to as an IAB node.

The base station 10 may be connected to a core network 30 via another base station 10 or directly. The core network 30 may include, for example, at least one of Evolved Packet Core (EPC), 5G Core Network (5GCN), Next Generation Core (NGC), or the like.

The core network 30 may include, for example, Network Functions (NFs) such as a User Plane Function (UPF), an Access and Mobility management Function (AMF), a Session Management Function (SMF), a Unified Data Management (UDM), an Application Function (AF), a Data Network (DN), a Location Management Function (LMF), or an Operation, Administration and Maintenance (Management) (OAM). Note that a plurality of functions may be provided by one network node. In addition, communication with an external network (for example, the Internet) may be performed via the DN.

The user terminal 20 may be a terminal that corresponds to at least one of communication methods such as LTE, LTE-A, and 5G.

In the radio communication system 1, a radio access method based on orthogonal frequency division multiplexing (OFDM) may be utilized. For example, in at least one of downlink (DL) and uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and so on may be utilized.

The radio access method may be referred to as a waveform. It is noted that in the radio communication system 1, another radio access method (for example, another single carrier transmission method or another multi-carrier transmission method) may be used as the UL and DL radio access method.

In the radio communication system 1, a downlink shared channel (physical downlink shared channel (PDSCH)) shared by the user terminals 20, a broadcast channel (physical broadcast channel (PBCH)), a downlink control channel (physical downlink control channel (PDCCH)), and so on may be used as downlink channels.

In the radio communication system 1, an uplink shared channel (Physical Uplink Shared Channel (PUSCH)) shared by the user terminals 20, an uplink control channel (Physical Uplink Control Channel (PUCCH)), a random access channel (Physical Random Access Channel (PRACH)), and so on may be used as uplink channels.

User data, higher layer control information, a System Information Block (SIB), and so on are transmitted on the PDSCH. The user data, higher layer control information, and so on may be transmitted on the PUSCH. Furthermore, a Master Information Block (MIB) may be transmitted on the PBCH.

Lower layer control information may be transmitted on the PDCCH. The lower layer control information may include, for example, Downlink Control Information (DCI) including scheduling information of at least one of the PDSCH and the PUSCH.

It is noted that the DCI that schedules the PDSCH may be referred to as DL assignment, DL DCI, or the like, and the DCI that schedules PUSCH may be referred to as UL grant, UL DCI, or the like. It is noted that the PDSCH may be interchangeable with DL data, and the PUSCH may be interchangeable with UL data.

For detection of the PDCCH, a control resource set (COntrol REsource SET (CORESET)) and a search space may be utilized. The CORESET corresponds to a resource for searching for DCI. The search space corresponds to a search area and a search method for PDCCH candidates. One CORESET may be associated with one or more search spaces. The UE may monitor a CORESET associated with a certain Search Space based on a Search Space configuration.

One search space may correspond to a PDCCH candidate corresponding to one or more aggregation levels. One or more search spaces may be referred to as a search space set. It is noted that "search space", "search space set", "search space configuration", "search space set configuration", "CORESET", "CORESET configuration", and so on in the present disclosure may be interchangeable with each other.

Uplink control information (UCI) including at least one of channel state information (CSI), delivery acknowledgement information (which may be referred to as, for example, hybrid automatic repeat request acknowledgement (HARQ-ACK), ACK/NACK, or the like), and scheduling request (SR) may be transmitted on the PUCCH. A random access preamble for establishing a connection with a cell may be transmitted on the PRACH.

It is noted that in the present disclosure, downlink, uplink, and so on may be expressed without "link". Various channels may be expressed without adding "physical" at the beginning thereof.

In the radio communication system 1, a synchronization signal (SS), a downlink reference signal (DL-RS), and so on may be transmitted. In the radio communication system 1, a cell-specific reference signal (CRS), a channel state information reference signal (CSI-RS), a demodulation reference signal (DMRS), a positioning reference signal (PRS), a phase tracking reference signal (PTRS), or the like may be transmitted as the DL-RS.

The synchronization signal may be, for example, at least one of a primary synchronization signal (PSS) and a secondary synchronization signal (SSS). A signal block including the SS (PSS, SSS) and the PBCH (and the DMRS for the PBCH) may be referred to as an SS/PBCH block, an SS Block (SSB), or the like. It is noted that, the SS, the SSB, or the like may also be referred to as a reference signal.

Furthermore, in the radio communication system 1, a measurement reference signal (sounding reference signal (SRS)), a demodulation reference signal (DMRS), or the like may be transmitted as an uplink reference signal (UL-RS). Note that, DMRS may be referred to as "user terminal-specific reference signal (UE-specific Reference Signal)."

### (Base Station)

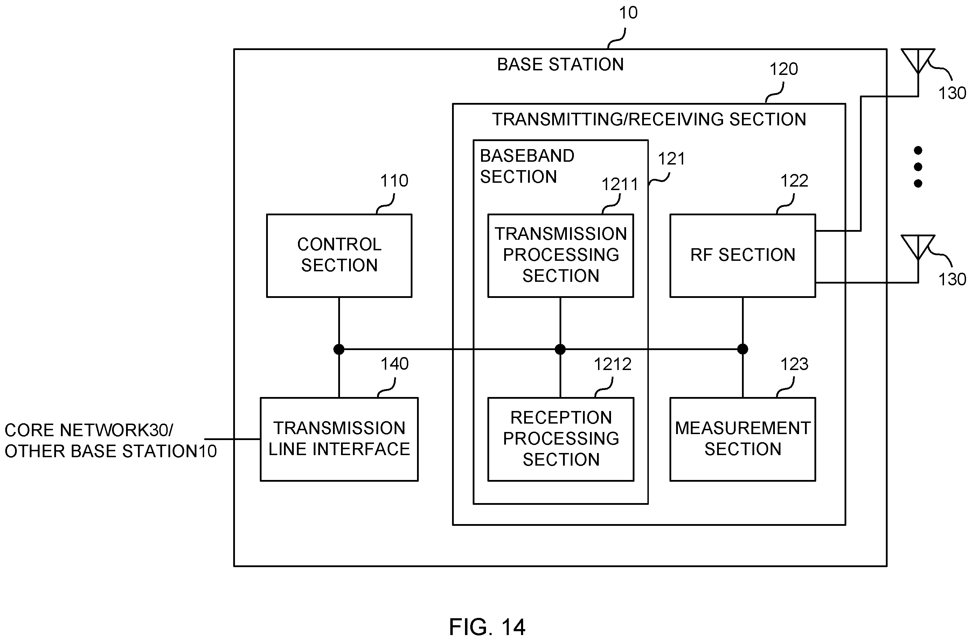

Fig. 14 is a diagram illustrating an example of a configuration of the base station according to one embodiment. The base station 10 includes a control section 110, a transmitting/receiving section 120, a transmitting/receiving antenna 130, and a transmission line interface 140. It is noted that one or more of the control sections 110, one or more of the transmitting/receiving sections 120, one or more of the transmitting/receiving antennas 130, and one or more of the transmission line interfaces 140 may be included.

It is noted that this example mainly describes a functional block which is a characteristic part of the present embodiment, and it may be assumed that the base station 10 also has another functional block necessary for radio communication. A part of processing of each section described below may be omitted.

The control section 110 controls the entire base station 10. The control section 110 can include a controller, a control circuit, or the like, which is described based on common recognition in a technical field according to the present disclosure.

The control section 110 may control signal generation, scheduling (for example, resource allocation or mapping), and so on. The control section 110 may control transmission/reception, measurement, and so on using the transmitting/receiving section 120, the transmitting/receiving antenna 130, and the transmission line interface 140. The control section 110 may generate data to be transmitted as a signal, control information, a sequence, and so on, and may forward the data, the control information, the sequence, and so on to the transmitting/receiving section 120. The control section 110 may perform call processing (such as configuration or releasing) of a communication channel, management of the state of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can include a transmitter/receiver, an RF circuit, a baseband circuit, a filter, a phase shifter, a measurement circuit, a transmission/reception circuit, or the like, which is described based on common recognition in a technical field according to the present disclosure.

The transmitting/receiving section 120 may be constituted as an integrated transmitting/receiving section, or may be constituted by a transmitting section and a receiving section. The transmitting section may include the transmission processing section 1211 and the RF section 122. The receiving section may include the reception processing section 1212, the RF section 122, and the measurement section 123.

The transmitting/receiving antenna 130 can include an antenna, for example, an array antenna, or the like, which is described based on common recognition in a technical field according to the present disclosure.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmission beam or a reception beam using digital beam forming (for example, precoding), analog beam forming (for example, phase rotation), and so on.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and so on, for example, data, control information, and so on acquired from the control section 110, to generate a bit string to be transmitted.

The transmitting/receiving section 120 (transmission processing section 1211) may perform transmission processing such as channel encoding (which may include error correction encoding), modulation, mapping, filtering processing, discrete Fourier transform (DFT) processing (if necessary), inverse fast Fourier transform (IFFT) processing, precoding, or digital-to-analog conversion on the bit string to be transmitted, to output a baseband signal.

The transmitting/receiving section 120 (RF section 122) may perform modulation to a radio frequency band, filtering processing, amplification, and so on, on the baseband signal, and may transmit a signal in the radio frequency band via the transmitting/receiving antenna 130.

Meanwhile, the transmitting/receiving section 120 (RF section 122) may perform amplification, filtering processing, demodulation to a baseband signal, and so on, on the signal in the radio frequency band received by the transmitting/receiving antenna 130.

The transmitting/receiving section 120 (reception processing section 1212) may apply reception processing such as analog-to-digital conversion, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal, to acquire user data and so on.

The transmitting/receiving section 120 (measurement section 123) may perform measurement on the received signal. For example, the measurement section 123 may perform radio resource management (RRM) measurement, channel state information (CSI) measurement, and so on based on the received signal. The measurement section 123 may measure received power (for example, reference signal received power (RSRP)), received quality (for example, reference signal received quality (RSRQ), a signal to interference plus noise ratio (SINR), a signal to noise ratio (SNR)), signal strength (for example, received signal strength indicator (RSSI)), propagation path information (for example, CSI), and so on. A measurement result may be output to the control section 110.

The transmission line interface 140 may transmit/receive a signal (backhaul signaling) to and from an apparatus (for example, a network node providing the NF) included in the core network 30, another base station 10, and so on, and may acquire, transmit, and so on user data (user plane data), control plane data, and so on for the user terminal 20.

It is noted that, the transmitting section and the receiving section of the base station 10 in the present disclosure may include at least one of the transmitting/receiving section 120, the transmitting/receiving antenna 130, and the transmission line interface 140.

The transmitting/receiving section 120 may transmit information regarding the additional conditions for a certain model or functionality. The control section 110 may control monitoring of the additional conditions based on the information. The information may include at least one of arrangement or scenario related information of a transmission and reception point (TRP), measurement or estimation related information, and terminal status information.

The transmitting/receiving section 120 may transmit information regarding the additional conditions or performance monitoring for a certain model or functionality. The control section 110 may control monitoring of the additional conditions or performance monitoring based on the information. The control section 110 may determine execution of monitoring of the additional conditions based on a result of the performance monitoring.

### (User Terminal)

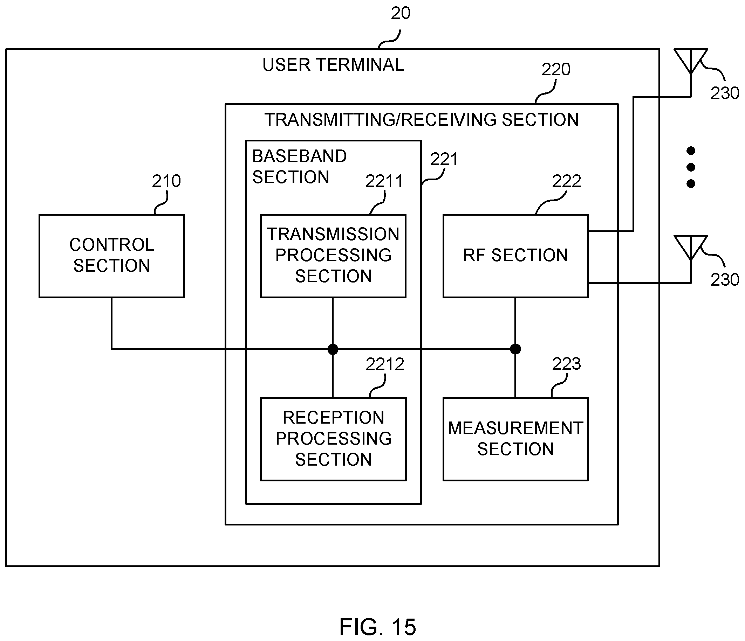

Fig. 15 is a diagram illustrating an example of a configuration of the user terminal according to one embodiment. The user terminal 20 includes a control section 210, a transmitting/receiving section 220, and a transmitting/receiving antenna 230. It is noted that one or more of the control sections 210, one or more of the transmitting/receiving sections 220, and one or more of the transmitting/receiving antennas 230 may be included.

It is noted that, although this example mainly describes functional blocks of a characteristic part of the present embodiment, it may be assumed that the user terminal 20 includes other functional blocks that are necessary for radio communication as well. A part of processing of each section described below may be omitted.

The control section 210 controls the entire user terminal 20. The control section 210 can include a controller, a control circuit, and so on that are described based on common recognition in the technical field related to the present disclosure.

The control section 210 may control signal generation, mapping, and so on. The control section 210 may control transmission/reception, measurement, and so on using the transmitting/receiving section 220 and the transmitting/receiving antenna 230. The control section 210 may generate data to be transmitted as a signal, control information, a sequence, and so on, and may forward the data, the control information, the sequence, and so on to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can include a transmitter/receiver, an RF circuit, a baseband circuit, a filter, a phase shifter, a measurement circuit, a transmission/reception circuit, and so on that are described based on common recognition in the technical field related to the present disclosure.

The transmitting/receiving section 220 may be formed as an integrated transmitting/receiving section, or may include a transmitting section and a receiving section. The transmitting section may include the transmission processing section 2211 and the RF section 222. The receiving section may include the reception processing section 2212, the RF section 222, and the measurement section 223.

The transmitting/receiving antenna 230 can include an antenna that is described based on common recognition in the technical field related to the present disclosure, for example, an array antenna or the like.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmission beam and a reception beam by using digital beam forming (for example, precoding), analog beam forming (for example, phase rotation), and so on.

The transmitting/receiving section 220 (transmission processing section 2211) may perform PDCP layer processing, RLC layer processing (for example, RLC retransmission control), MAC layer processing (for example, HARQ retransmission control), and so on, for example, on data, control information, and so on acquired from the control section 210, to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-to-analog conversion on the bit string to be transmitted, to output a baseband signal.

It is noted that whether to apply DFT processing may be determined based on a configuration of transform precoding. When the transform precoding is enabled for a channel (for example, PUSCH), the transmitting/receiving section 220 (transmission processing section 2211) may perform DFT processing as the transmission processing to transmit the channel by using a DFT-s-OFDM waveform, and otherwise, DFT processing does not have to be performed as the transmission processing.

The transmitting/receiving section 220 (RF section 222) may perform modulation to a radio frequency band, filtering processing, amplification, and so on, on the baseband signal, to transmit a signal in the radio frequency band via the transmitting/receiving antenna 230.

Meanwhile, the transmitting/receiving section 220 (RF section 222) may perform amplification, filtering processing, demodulation to a baseband signal, and so on, on the signal in the radio frequency band received by the transmitting/receiving antenna 230.

The transmitting/receiving section 220 (reception processing section 2212) may apply reception processing such as analog-to-digital conversion, FFT processing, IDFT processing (if necessary), filtering processing, demapping, demodulation, decoding (which may include error correction decoding), MAC layer processing, RLC layer processing, or PDCP layer processing on the acquired baseband signal to acquire user data and so on.

The transmitting/receiving section 220 (measurement section 223) may perform measurement on the received signal. For example, the measurement section 223 may perform RRM measurement, CSI measurement, and so on based on the received signal. The measurement section 223 may measure received power (for example, RSRP), received quality (for example, RSRQ, SINR, or SNR), signal strength (for example, RSSI), propagation path information (for example, CSI), and so on. A measurement result may be output to the control section 210.

Note that the measurement section 223 may derive channel measurement for CSI computation, based on a channel measurement resource. The channel measurement resource may be, for example, a non-zero power (NZP) CSI-RS resource. In addition, the measurement section 223 may derive interference measurement for CSI computation, based on an interference measurement resource. The interference measurement resource may be at least one of an NZP CSI-RS resource for interference measurement, a CSI-interference measurement (IM) resource, or the like. Note that the CSI-IM may be referred to as CSI-interference management (IM), and may be interchangeably used with a zero power (ZP) CSI-RS. Note that, in the present disclosure, CSI-RS, NZP CSI-RS, ZP CSI-RS, CSI-IM, CSI-SSB, and so on may be interchangeably used with each other.

It is noted that the transmitting section and the receiving section of the user terminal 20 in the present disclosure may include at least one of the transmitting/receiving section 220 and the transmitting/receiving antenna 230.

The transmitting/receiving section 220 may receive information regarding the additional conditions for a certain model or functionality. The control section 210 may control monitoring of the additional conditions based on the information. The information may include at least one of arrangement or scenario related information of a transmission and reception point (TRP), measurement or estimation related information, and terminal status information. The control section 210 may determine the additional condition based on an implicit instruction using the model ID included in the information or an explicit instruction using the additional condition ID included in the information. The control section 210 may control the monitoring by comparing an additional condition for model training with an additional condition for model inference. The transmitting/receiving section 220 may receive an instruction related to the maximum number of indicators available in monitoring of the additional conditions or selection of the additional conditions to be monitored. The control section 210 may control the monitoring based on the instruction.

The transmitting/receiving section 220 may receive information regarding the additional conditions or performance monitoring for a certain model or functionality. The control section 210 may control monitoring of the additional conditions or performance monitoring based on the information. The control section 210 may determine execution of the monitoring of the additional conditions based on a result of the performance monitoring. The control section 210 may determine execution of monitoring of the performance monitoring based on a result of the monitoring of the additional conditions. The control section 210 may select a performance indicator for the monitoring and control triggering of corresponding data in a case where the monitoring of the additional conditions is satisfied, and execute at least one of a fallback operation, update of a model or functionality in consideration of a certain parameter, and indication of a status for the additional conditions to be monitored in a case where the monitoring of the additional conditions is not satisfied. The control section 210 may perform control to report the monitoring result of the additional condition and the performance monitoring result together or separately.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

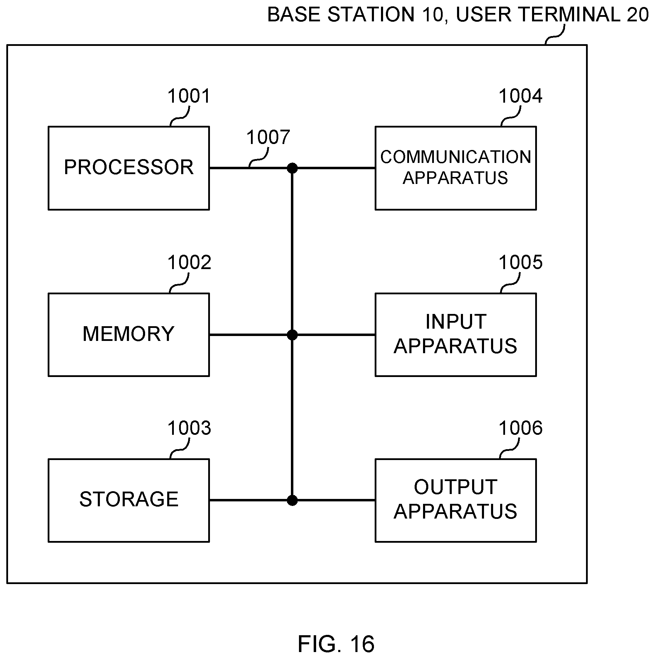

For example, a base station, a user terminal, and so on according to one embodiment of the present disclosure may function as a computer that executes the processes of the radio communication method of the present disclosure. FIG. 16 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

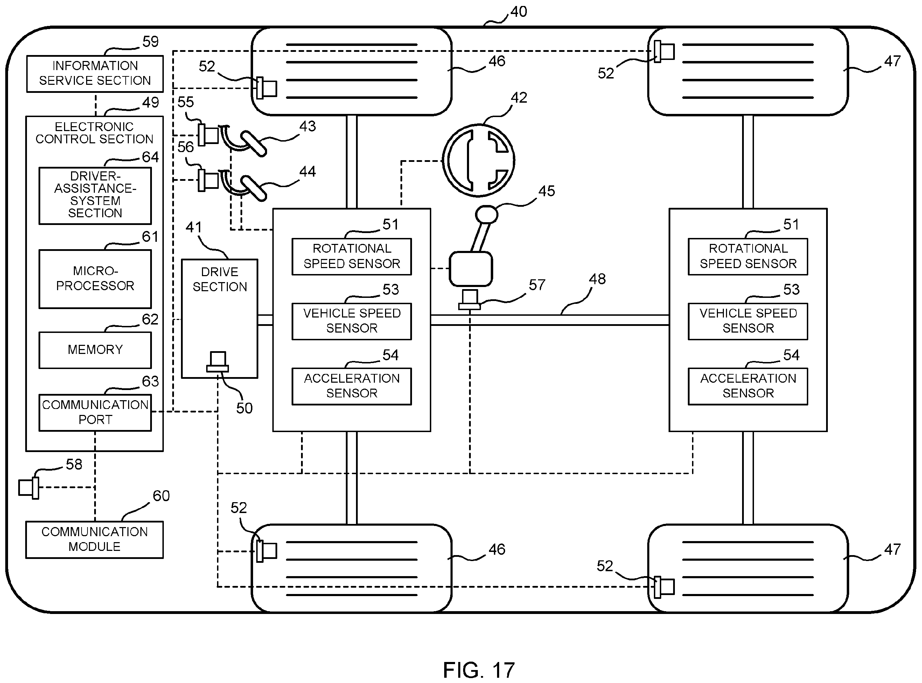

FIG. 17 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s)..." ("..." may be expressed using, for example, a that-clause, a to-infinitive, or the like) may be used interchangeably with "be expected...". "Does not expect..." may be used interchangeably with "be not expected...". Furthermore, "an apparatus A is not expected..." may be used interchangeably with "an apparatus B other than the apparatus A does not expect... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a receiving section configured to receive information regarding additional conditions or performance monitoring for a certain model or functionality; and
a control section configured to control monitoring of the additional conditions or performance monitoring based on the information,
wherein the control section determines execution of monitoring of the additional conditions based on a result of the performance monitoring.

2. The terminal according to claim 1, wherein the control section determines execution of the performance monitoring based on a monitoring result of the additional conditions.

3. The terminal according to claim 1, wherein the control section selects a performance indicator for the monitoring and controls triggering of corresponding data in a case where the monitoring of the additional conditions is satisfied, and executes at least one of a fallback operation, update of a model or functionality in consideration of a certain parameter, and indication of a status for the additional conditions to be monitored in a case where the monitoring of the additional conditions is not satisfied.

4. The terminal according to claim 1, wherein the control section controls to report the monitoring result of the additional condition and the performance monitoring result together or separately.

5. A radio communication method of a terminal, the method comprising:
a step of receiving information regarding additional conditions or performance monitoring for a certain model or functionality;
a step of controlling monitoring of the additional conditions or performance monitoring based on the information; and
a step of determining execution of monitoring of the additional conditions based on a result of the performance monitoring.

6. A base station comprising:
a transmitting section configured to transmit information regarding additional conditions or performance monitoring for a certain model or functionality; and
a control section configured to control monitoring of the additional conditions or performance monitoring based on the information,
wherein the control section determines execution of monitoring of the additional conditions based on a result of the performance monitoring.
